# EUROPEAN PATENT APPLICATION

(11) **EP 4 369 782 A1**
(43) Date of publication of application: **15.05.2024**
(21) Application number: 22853423.6
(22) Date of filing: 02.08.2022
(51) Int. Cl.: H04W 28/08, H04W 24/02, H04W 24/10, H04W 88/18

(54) **METHOD AND DEVICE FOR PERFORMING LOAD BALANCE IN WIRELESS COMMUNICATION SYSTEM**

(30) Priority: 02.08.2021 KR 20210101224
(71) Applicant: Samsung Electronics Co., Ltd., Suwon-si, Gyeonggi-do 16677 (KR)
(72) Inventor: LEE, Hyungho, Suwon-si, Gyeonggi-do 16677 (KR); HAN, Gyusu, Suwon-si, Gyeonggi-do 16677 (KR)
(74) Representative: HGF
(86) International application number: PCT/KR2022/011393
(87) International publication number: WO 2023/014046

(57) **Abstract**

An operation method of a server in a wireless communication system of the present disclosure may comprise the operations of: acquiring first CM information and first PM information during a first period for a sector managed by the server; training a load balance model on the basis of the first CM information and the first PM information; and determining a second load balance parameter to be used for distribution of communication traffic within the sector on the basis of output information output upon an input of each of multiple candidate load balance parameters to the load balance model. The first CM information may include a first load balance parameter, and the first PM information may include at least one PM value.

## Description

### [Technical Field]

The disclosure generally relates to a wireless communication system, and more particularly, to a method and an apparatus for performing load balancing in a wireless communication system.

### [Background Art]

Efforts to develop enhanced 5^{th} generation (5G) communication systems or pre-5G communication systems have been ongoing in order to meet the increasing demand for wireless data traffic since 4^{th} generation (4G) communication systems were commercialized. For this reason, 5G communication systems or pre-5G communication systems are called Beyond 4G network communication systems or post long term evolution (LTE) systems.

A 5G communication system is considered to be implemented in a superhigh frequency (mmWave) band (for example, 60 GHz band) to achieve a high data transmission rate. For 5G communication systems, technologies for beamforming, massive multiple input multiple output (MIMO), full dimensional MIMO (FD-MIMO), array antenna, analog beam-forming, and large scale antenna are being discussed to mitigate a path loss of radio waves and to increase a transmission distance of radio waves in a superhigh frequency band.

In addition, technologies for evolved small cells, advanced small cells, cloud ratio access network (RAN), ultra-dense network, device to device communication (D2D), wireless backhaul, moving network, cooperative communication, coordinated multi-points (CoMP), and/or interference cancellation in 5G communication systems are developing to enhance networks of systems.

In addition, hybrid frequency shift keying and quadrature amplitude modulation (FQAM) and sliding window superposition coding (SWSC), which are advanced coding modulation (ACM) schemes, and filter bank multi carrier (FBMC), non-orthogonal multiple access (NOMA), and/or sparse code multiple access (SCMA) which are enhanced accessing technology in 5G systems are developing.

### [Disclosure of Invention]

### [Technical Problem]

There may be a plurality of cells having different use frequency bands in a sector of a wireless communication system. The plurality of cells having different use frequency bands may have different data throughputs and/or different communication loads. There may be a need for solving an imbalance in throughputs and/or communication loads between the plurality of cells for the sake of smooth communication.

In addition, even when a load between a plurality of cells in a sector is controlled through a load balance (LB) parameter applied to a base station, there may be a need for a method for evaluating the applied LB parameter and performance of the sector based on the LB parameter.

### [Solution to Problem]

According the disclosure, an operating method of a server in a wireless communication system may include: acquiring first configuration management (CM) information and first performance management (PM) information of a first period regarding a sector managed by the server; training a load balance model based on the first CM information and the first PM information; and determining a second load balance parameter to be used for distribution of communication traffic in the sector, based on output information which is outputted as a plurality of candidate load balance parameters are inputted to the load balance model. The first CM information may include a first load balance parameter used for distribution of communication traffic in the sector, and the first PM information may include at least one PM value indicating communication performance of the sector.

According the disclosure, a server in a wireless communication system may include a transceiver and at least one processor, and the at least one processor may acquire first configuration management (CM) information and first performance management (PM) information of a first period regarding a sector managed by the server, may train a load balance model based on the first CM information and the first PM information, and may determine a second load balance parameter to be used for distribution of communication traffic in the sector, based on output information which is outputted as a plurality of candidate load balance parameters are inputted to the load balance model. The first CM information may include a first load balance parameter used for distribution of communication traffic in the sector, and the first PM information may include at least one PM value indicating communication performance of the sector.

### [Advantageous Effects of Invention]

The apparatus and the method according to embodiments of the disclosure may effectively use a memory of a LB server or computation power.

The apparatus and the method according to embodiments of the disclosure may predict an exact load imbalance by using past information from various information sources.

The apparatus and the method according to embodiments of the disclosure may detect a load imbalance by using not only a key performance index (KPI) of a base station but also a sevice quality index.

The apparatus and the method according to embodiments of the disclosure may determine an optimal LB parameter suitable for a situation of each sector in an environment where a plurality of cells using different frequency bands in one sector of a wireless communication system coexist, and may perform load balancing based on the determined LB parameter.

The effects achieved by the disclosure are not limited to those mentioned above, and other effects that are not mentioned above may be clearly understood to those skilled in the art based on the description provided above.

### [Brief Description of Drawings]

FIG. 1 illustrates a wireless communication system according to various embodiments of the disclosure;
FIG. 2A illustrates a configuration of a server in a wireless communication system according to various embodiments of the disclosure;
FIG. 2B illustrates a configuration of a base station in the wireless communication system according to various embodiments of the disclosure;
FIG. 3 illustrates an example of a process of performing load balancing in a wireless communication system;
FIG. 4 illustrates an example of a process of performing load balancing in a wireless communication system;
FIG. 5 illustrates an operation of a load balance server in a wireless communication system according to various embodiments of the disclosure;
FIG. 6 illustrates an operation of collecting, by a load balance server, information of a sector from a database in a wireless communication system according to various embodiments of the disclosure;
FIG. 7 illustrates an operation of performing load imbalance prediction in a wireless communication system according to various embodiments of the disclosure;
FIG. 8 illustrates an operation of a load balance parameter selection function in a wireless communication system according to various embodiments of the disclosure;
FIG. 9 illustrates an operation of a load balance parameter rule set monitoring function in a wireless communication system according to various embodiments of the disclosure;
FIG. 10 illustrates an example of a process of performing load balancing in a wireless communication system according to various embodiments of the disclosure;
FIG. 11 illustrates an example of a load balance model in a wireless communication system according to various embodiments of the disclosure;
FIG. 12 illustrates an example of a process of performing load balancing in a wireless communication system according to various embodiments of the disclosure;
FIG. 13 is a view to explain a wireless communication system including a LB server according to an embodiment;
FIG. 14 is a view to explain a method for determining and applying a LB parameter according to an embodiment;
FIG. 15 is a flowchart to explain a method for determining a first LB parameter according to an embodiment;
FIG. 16A is a flowchart to explain a process of generating a LB parameter policy according to an embodiment;
FIG. 16B is a view to explain a load balance model and local models included in the load balance model according to an embodiment;
FIG. 17 is a view to explain an operation of generating a sector scenario of FIG. 16A according to an embodiment;
FIG. 18 is a view to explain an operation of identifying a LB parameter application rate of FIG. 17 according to an embodiment;
FIG. 19 is a view to explain an example of a sector scenario generated according to an embodiment;
FIG. 20 is a view to explain training of local models of FIG. 16A according to an embodiment;
FIG. 21 is a view to explain a cell health determination operation of a cell health prediction model according to an embodiment;
FIG. 22 is a concept view to explain a LB parameter optimization process according to an embodiment; and
FIG. 23 is a view to explain a parameter policy based on a LB parameter application rate according to an embodiment.

Regarding explanation of the drawings, the same or similar reference numerals may be used to indicate the same or similar components.

### [Mode for Carrying out the Invention]

Hereinafter, various embodiments of the disclosure will be described with reference to the accompanying drawings. However, these are not intended to limit the disclosure to a specific embodiment and should be understood as including various modifications, equivalents, and/or alternatives of embodiments of the disclosure.

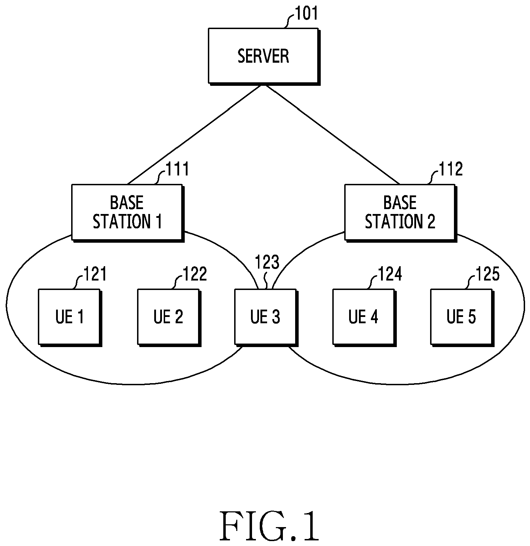

FIG. 1 illustrates a wireless communication system according to embodiments of the disclosure.

FIG. 1 illustrates a server 101, a first base station 111, a second base station 112, and/or terminals 121, 122, 123, 124 as part of nodes using wireless channels in a wireless communication system.

Although FIG. 1 illustrates only one server 101, two base stations 111, 112, the wireless communication system of the disclosure may further include another sever which is the same as or similar to the server 101, or may further include another base station which is the same as or similar to the base stations 111, 112.

According to an embodiment, the server 101 may be a node that receives information on a load of each sector from the base stations 111, 112, and performs load balancing for the base stations 111, 112.

According to an embodiment, the base stations 111, 112 may perform communication of each sector. The base stations 111, 112 may be network infrastructures that provide radio access to the terminals 121, 122, 123, 124, 125. The base stations 111, 112 may have a coverage that is defined as a predetermined geographical region based on a distance by which a signal may be transmitted.

According to an embodiment, the base stations 111, 112 may be referred to as "access point (AP)," "eNodeB (eNB)," "5^{th} generation (5G) node," "next generation nodeB (gNB)," "wireless point," "transmission/reception point (TRP)," or other terms having the same technical meaning as the above-mentioned terms, in addition to the base station.

According to an embodiment, each of the terminals 121, 122, 123, 124, 125 is a device which is used by a user, and may perform communication with the base stations 111, 112 through wireless channels. Each of the terminals 121, 122, 123, 124, 125 may be referred to as "user equipment (UE)," "mobile station," "subscriber station," "remote terminal," "wireless terminal," or "user device," or other terms having the same technical meaning as the above-mentioned terms, in addition to the terminal.

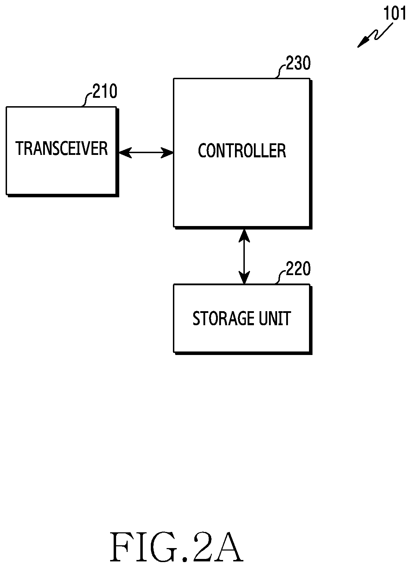

FIG. 2A illustrates a configuration of a server in a wireless communication system according to embodiments of the disclosure.

The configuration illustrated in FIG. 2A may be understood as a configuration of the server 101. The term "unit" or terms ending with suffixes "-er," and "-or" used in the following descriptions refer to a unit processing at least one function or operation, and may be implemented by hardware, software, or a combination of hardware and software.

Referring to FIG. 2A, the server 101 according to an embodiment may include a transceiver 210, a storage unit 220, and/or a controller 230.

According to an embodiment, the transceiver 210 may transmit and/or receive signals. An entirety or a part of the transceiver 210 may be referred to as a 'transmitter', a 'receiver', or a 'transceiver'.

According to an embodiment, the storage unit 220 may store data such as a basic program for operations of the server, an application program, configuration information, etc. The storage unit 220 may be configured by a volatile memory, a non-volatile memory, or a combination of a volatile memory and a non-volatile memory. In addition, the storage unit 220 may provide stored data according to a request of the controller 230.

According to an embodiment, the controller 230 may control overall operations of the server. For example, the server may transmit and/receive a signal through the transceiver 210 under control of the controller 230. In addition, the controller 230 may write data on the storage unit 220, and may read data therefrom. The controller 240 may include at least one processor.

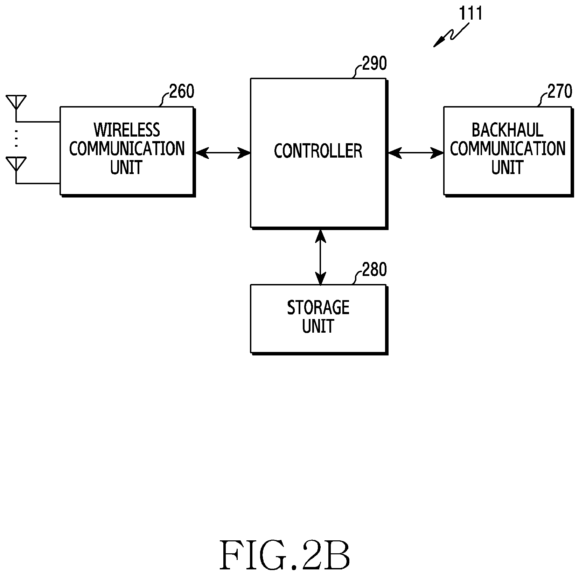

FIG. 2B illustrates a configuration of a base station in a wireless communication system according to an embodiment of the disclosure.

The configuration illustrated in FIG. 2B may be understood as a configuration of the base station 111. The term "unit" or terms ending with suffixes "-er," and "-or" used in the following descriptions refer to a unit processing at least one function or operation, and may be implemented by hardware, software, or a combination of hardware and software.

Referring to FIG. 2B, the base station 111 according to an embodiment may include a wireless communication unit 260, a backhaul communication unit 270, a storage unit 280, and/or a controller 290.

According to an embodiment, the wireless communication unit 260 may perform functions for transmitting and receiving signals via a wireless channel. For example, the wireless communication unit 260 may perform a function of converting between a baseband signal and a bit stream according to a physical layer standard of a system. For example, when transmitting data, the wireless communication unit 260 may generate complex symbols by encoding and modulating a transmission bit stream. In addition, when receiving data, the wireless communication unit 260 may reconstruct a reception bit stream by demodulating and decoding a baseband signal.

According to an embodiment, the wireless communication unit 260 may up-convert a baseband signal into a radio frequency (RF) band signal, and then may transmit the signal via an antenna, and may down-convert an RF band signal received via an antenna into a baseband signal. The wireless communication unit 260 may include a transmission filter, a reception filter, an amplifier, a mixer, an oscillator, a digital to analog convertor (DAC), an analog to digital convertor (ADC), or the like. The wireless communication unit 260 may include a plurality of transmission and reception paths. The wireless communication unit 260 may include at least one antenna array including a plurality of antenna elements.

According to an embodiment, the wireless communication unit 260 may transmit and/or receive signals. An entirety or a part of the wireless communication unit 260 may be referred to as a "transmitter," a "receiver," or a "transceiver."

According to an embodiment, the backhaul communication unit 270 may provide an interface for communicating with other nodes in a network. That is, the backhaul communication unit 270 may convert a bit stream to be transmitted from the base station to another node, for example, another access node, another base station, a higher node including the server 101, a core network, or the like, into a physical signal, and may convert a physical signal transmitted from another node into a bit stream.

According to an embodiment, the storage unit 280 may store data such as a basic program for operations of the base station, an application program, configuration information, or the like. The storage unit 230 may be configured by a volatile memory, a nonvolatile memory, or a combination of a volatile memory and a nonvolatile memory. In addition, the storage unit 280 may provide stored data according to a request of the controller 290.

According to an embodiment, the controller 290 may control overall operations of the base station. For example, the controller 290 may transmit and/or receive signals via the wireless communication unit 260 or the backhaul communication unit 270. The controller 290 may write and read out data on or from the storage unit 280. In addition, the controller 290 may perform functions of a protocol stack required by communication standards. According to another implementation example, the protocol stack may be included in the wireless communication unit 260. To achieve this, the controller 290 may include at least one processor.

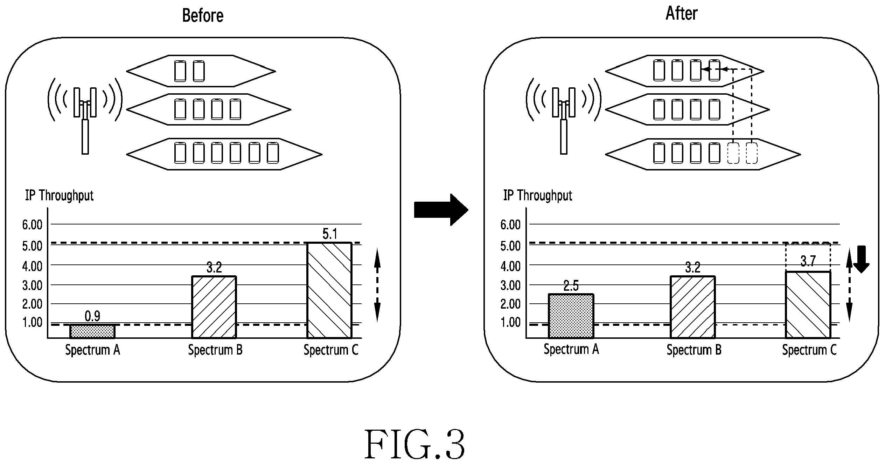

FIG. 3 illustrates an example of a process of performing load balancing in a wireless communication system according to an embodiment.

Referring to FIG. 3, load balancing according to an embodiment may be applied in a wireless communication system. For example, the wireless communication system may include 4G long term evolution (LTE) and/or 5G new radio (NR). Load balancing may be applied to a self-organizing network (SON), and may be performed in the form of inter-frequency load balancing in a centralized SON.

According to an embodiment, a LB parameter may include a handover (HO) setting parameter (for example, A1, A2, A4, A5 threshold values) and a cell reselection setting parameter which aim at solving or mitigating an imbalance of an Internet protocol (IP) throughput or a load imbalance between cells in a base station environment where there are a plurality of cells having different use frequency bands in one sector of a wireless communication network. In an embodiment, a base station may automatically adjust an inter-sector load by using a LB parameter.

According to an embodiment, it is illustrated that a LB parameter includes a handover setting parameter and a cell reselection setting parameter, but this is merely an example. For example, a LB parameter may further include an additional parameter in addition to a handover setting parameter and a cell reselection setting parameter. For example, a LB parameter may include only one of a handover setting parameter and a cell reselection setting parameter.

According to an embodiment, there may be a great deviation of IP throughputs among a spectrum A, a spectrum B, and a spectrum C before loading balancing is performed, but the deviation of IP throughputs among the spectrum A, the spectrum B, and the spectrum C may be reduced after load balancing is performed. The wireless communication system and/or the base station may rebalance a part of loads of the spectrum A that has many loads by the spectrum C that has few loads, and the deviation of loads among the spectrum A, the spectrum B, and the spectrum C may be reduced.

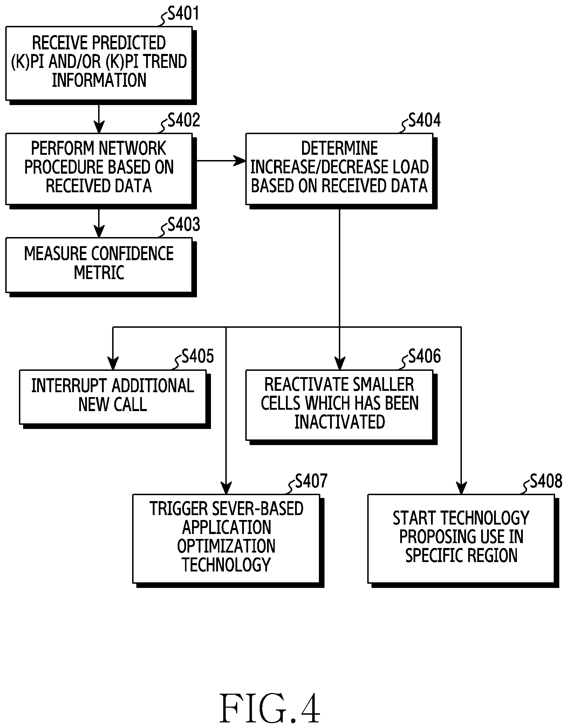

FIG. 4 illustrates an example of a process of performing load balancing by a server in a wireless communication system.

Referring to FIG. 4, at step S401, a server may receive a predicted (key) performance index ((K) PI) and/or (K) PI trend information. The (K) PI may stand for a (key) performance index. The server may generate at least one of a prediction performance index or display performance trend information for a first network element. The server may receive performance index trend information of a second network element from the one or more first network elements of at least one prediction performance index.

At step S402, the server may perform a network procedure based on received data. The server may transmit at least one of the prediction performance index or index performance trend information from the first network element to the second network element.

At step S403, the server may measure a confidence metric. The confidence metric may be based on at least one of at least one network procedure prediction performance index performed in the second network element or received performance index trend information.

At step S404, the server may determine an increase/decrease load based on received data. The server may determine whether a network load increases or decreases, based on at least one of the received prediction performance index or performance index trend information.

At step S405, the server may interrupt an additional call. According to an embodiment, the server may interrupt more new calls when an additional load is predicted in a neighboring cell.

At step S406, the server may reactivate smaller cells which have been inactivated before. According to an embodiment, the server may reactivate inactivated smaller cells.

At step S407, the server may trigger a server-based application optimization technology. The server may trigger a server-based application optimization technique (decreasing traffic load) to increase or reduce a load.

At step S408, the server may start a technology that proposes use in a specific region. The server may start using an application program in a region according to a region performance index.

The method according to the embodiment of FIG. 4 may have the following problems.
(1) The method according to the embodiment of FIG. 4 does not include a solution to a constraint condition where many memories and calculation resources are required to predict a KPI.
(2) The method according to the embodiment of FIG. 4 does not guarantee an exact prediction result due to characteristics of KPI prediction, and does not include a solution when prediction is false.
(3) The method according to the embodiment of FIG. 4 does not consider elements (for example, cell coverage information, etc.) which are required for a load balancing operation besides a KPI needed for load prediction.
(4) The method according to the embodiment of FIG. 4 does not include a method for resolving a load balance by adjusting a handover parameter among methods for resolving a load balance.
(5) The method according to the embodiment of FIG. 4 applies a method for resolving a load balance, but does not include a solution when a traffic load imbalance is not solved.

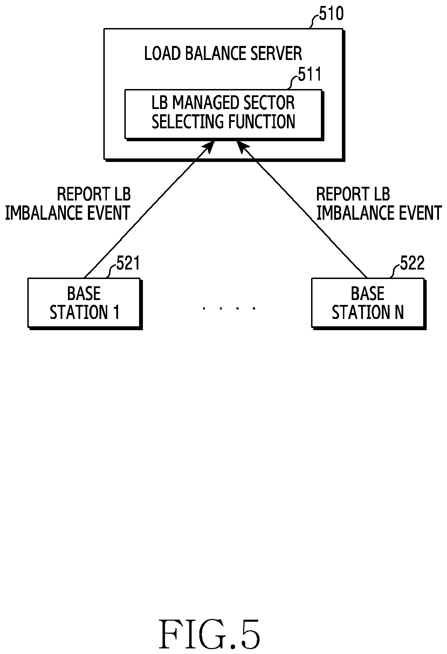

To solve the above-described problems, a method proposed in embodiments of FIGS. 5 to 9 may effectively predict occurrence of an inter-frequency band load imbalance in a mobile communication network, and may prevent degradation of quality of experience of a communication service which is caused by a load imbalance.

A server according to embodiments of FIGS. 5 to 9 includes the following four functions:
(1) a load balance (LB) managed sector selection function;
(2) a load imbalance prediction function;
(3) a LB parameter selection function; and
(4) a LB parameter rule set monitoring function.

FIG. 5 illustrates operations of a load balance server in a wireless communication system according to various embodiments of the disclosure.

In the embodiment of FIG. 5, a load balance (LB) managed sector selection function of the server according to various embodiments of the disclosure is illustrated.

Referring to FIG. 5, the load balance server 510 according to an embodiment may include a LB managed sector selection function 511. Each base station 521, 522 may transmit a LB imbalance event report to the LB managed sector section function 511 in the load balance server 510.

According to an embodiment, the base stations 521, 522 which perform communication of each sector (hereinafter, a sector and a base station are interchangeably used) may monitor a key performance index (KPI) which is needed to determine a load imbalance between cells which have overlapping communication ranges and use different frequency bands (hereinafter, referred to as coverage overlapped cells).

According to an embodiment, KPI imbalance determination may be performed by observing the following KPI with respect to coverage overlapped cells.
(1) Imbalance of the number of an RRC connected UE
(2) Imbalance of the number of an active UE
(3) Imbalance of an Internet protocol (IP) throughput of each user equipment (UE)
(4) Imbalance of radio resource utilization

According to an embodiment, when a load imbalance of coverage overlapped cells occurs as a result of observing, each sector may report the load imbalance to the LB server. In this case, an observed KPI may be included in the report.

According to an embodiment, the LB server 510 may select a target LB managed sector, based on the past record of occurrence of a load imbalance event of all sectors. A selection method may be a method of selecting a managed sector by considering a frequency of occurrence of a load imbalance of a corresponding sector over the past few weeks, and a degree of the load imbalance.

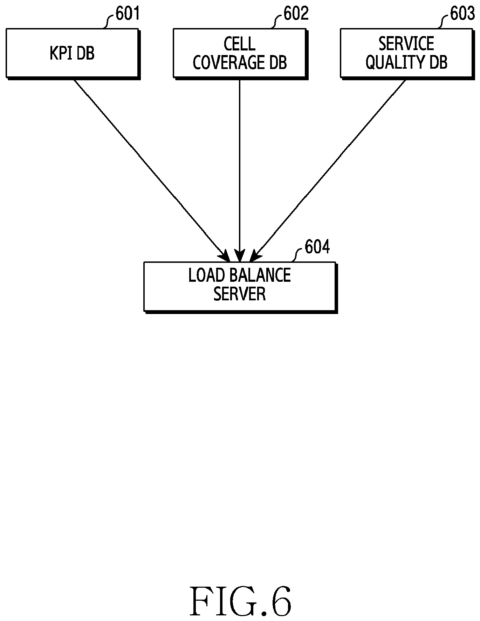

FIG. 6 illustrates an operation of collecting, by a load balance server, information of a sector from a database in a wireless communication system according to various embodiments of the disclosure.

In the embodiment of FIG. 6, a load imbalance prediction function of a server according to various embodiments of the disclosure is illustrated.

According to an embodiment, a LB server 604 may retrieve past information (for example, information of the previous four weeks) collected from a database which stores a KPI which is LB-related information of coverage overlapped cells of a managed sector selected in the embodiment of FIG. 5, coverage overlap, and service quality information.

According to an embodiment, the load imbalance prediction function of the LB server 604 may predict future hourly LB-related information (for example, information seven days after) of the managed sector periodically (for example, every seven days), based on the past information, and may predict future hourly load imbalance occurrence based on the hourly LB-related information.

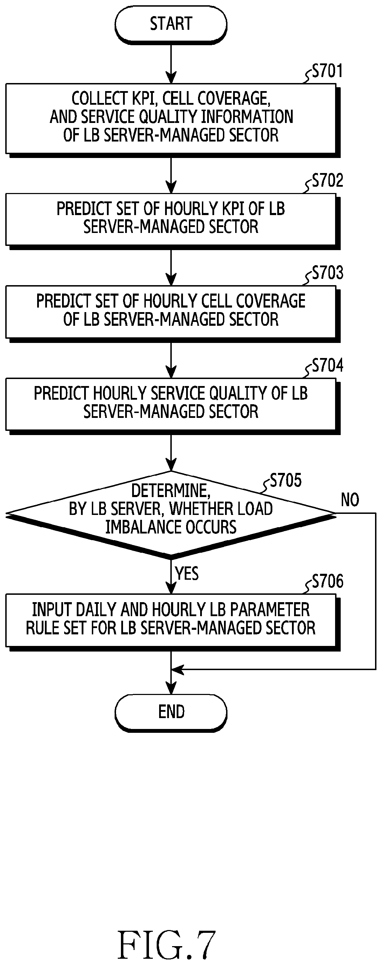

According to an embodiment, the load imbalance prediction function of the load balance server 604 has three detailed prediction functions to predict hourly load imbalance occurrence as will be described below with reference to FIG. 7.

FIG. 7 illustrates an operation of predicting a load imbalance in a wireless communication system according to various embodiments of the disclosure.

Referring to FIG. 7, a load balance server according to an embodiment may collect a KPI, cell coverage information and/or service quality information of a sector, and then, may predict a set of hourly KPIs, a set of hourly cell coverages, and/or hourly service quality of the managed sector.

According to an embodiment, at step S701, the LB server may collect a KPI, a cell coverage, and service quality information of a managed sector.

According to an embodiment, at step S702, the LB server may predict a set of hourly KPIs of the managed sector.

According to an embodiment, at step S703, the LB server may predict a set of hourly cell coverages of the managed sector.

According to an embodiment, at step S704, the LB server may predict hourly service quality of the managed sector.

According to an embodiment, at step S705, the LB server may determine whether a load imbalance will occur. When it is predicted that a load imbalance occurs, the LB server proceeds to step S706. When it is predicted that a load imbalance does not occur, the LB server may finish the procedure.

According to an embodiment, at step S706, the LB server may input a day and time-based LB parameter rule set regarding the managed sector.

In the embodiment of FIG. 7, each prediction function of the load balance server may predict hourly information until a future date (for example, one week after), based on past information of a target sector. Prediction may be achieved by a plurality of candidate information sets to increase prediction confidence.
(1) Hourly KPI information predictor
(2) Hourly coverage overlap information predictor
(3) Hourly service quality information predictor

Each prediction function may predict future information by using the following methods.
(1) Artificial intelligence (AI)-based time-series prediction model
(2) Statistical technique

According to an embodiment, the load imbalance prediction function may determine whether a load imbalance occurs, based on an hourly KPI, hourly coverage overlap information, and service quality information of each of coverage overlapped cells. A load imbalance of coverage overlapped cells may be determined based on the following criteria.
(1) KPI imbalance
(1-1) Imbalance of the number of an RRC-connected UE
(1-2) Imbalance of the number of an active UE
(1-3) Imbalance of Internet IP throughput of each of UE
(1-4) Imbalance of radio resource utilization
(1-5) Imbalance of base station queue delay
(1-6) Load metric calculated by a combination of the above-mentioned imbalances
(2) Imbalance of service quality (quality of experience (QoE) of each frequency band)
(2-1) Imbalance of voice service QoE
(2-2) Imbalance of video service QoE
(2-3) Imbalance of other service QoE

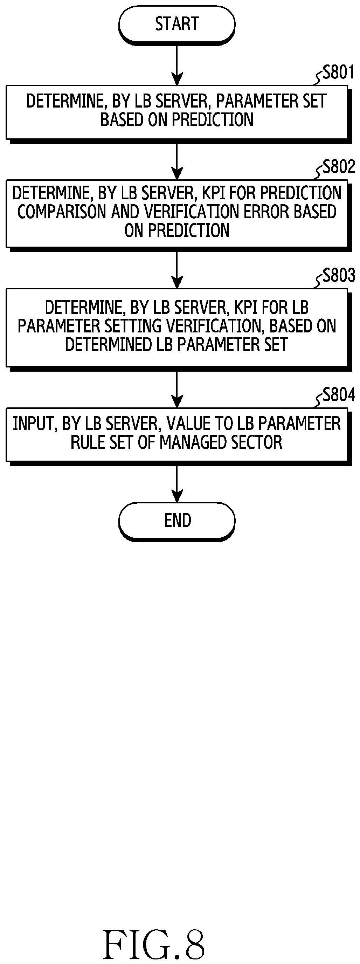

FIG. 8 illustrates an operation of a load balance parameter selecting function in a wireless communication system according to various embodiments of the disclosure.

The embodiment of FIG. 8 illustrates a LB parameter selecting function of a server according to various embodiments of the disclosure.

Referring to FIG. 8, at step S801 according to an embodiment, a LB server may determine a LB parameter set based on prediction.

According to an embodiment, at step S802, the LB server may determine a KPI regarding prediction comparison and a verification error based on prediction.

According to an embodiment, at step S803, the LB server may determine a KPI regarding LB parameter setting verification, based on the determined LB parameter set.

According to an embodiment, at step S804, the LB server may input a value to a LB parameter rule set of a managed sector.

According to an embodiment, a sector in which a load imbalance is predicted to occur may select LB parameter rule sets which consist of a single or a plurality of LB parameter rules conforming to situations of prediction information sets of coverage overlapped cells. If a plurality of candidate information sets are predicted in the embodiment of FIG. 7, the sector may find a LB parameter rule according to each prediction result. That is, the sector may find a plurality of LB parameter rules.

According to an embodiment, the LB server may make a discovered LB parameter setting rule set in a predicted sector, such that a LB parameter to be applied to the predicted sector may be applied before a predicted load imbalance occurs.

According to an embodiment, the LB server may deliver the LB parameter rule set to the sector before a load imbalance occurs, by referring to a predicted time at which the load imbalance will occur. As the LB parameter rule set is delivered to the sector, the LB server allows the sector to change a LB parameter before the load imbalance occurs.

According to an embodiment, the managed sector may set, as a LB parameter of the sector, a LB parameter of a high priority LB parameter rule at a predicted time at which the load imbalance will occur, designated by the received LB parameter rule set.

According to an embodiment, the LB parameter rule set may include items of the following table 1:

**Table 1 shows constitutions of a LB parameter rule set.**

| Items | Descriptions |
|---|---|
| Sector id | Managed sector identifier |
| Predicted LB occur time | Data & time |
| -LB rule id | Identifier for a case where a plurality of LB parameter set rules are included |
| -LB rule priority | Priority informing a rule that is applied to a sector, first |
| -LB parameter set | LB parameter value set to be set for each rule |
| -KPI for prediction comparison | Prediction KPI value of each rule, each KPI (e.g. RRC UE of sector, ACT UE of sector, Traffic load, Cell Coverage) |
| -KPI for prediction verification error threshold | Criterion for determining whether to report a KPI prediction error for each rule, each KPI |
| -KPI for LB parameter setting verification | Expected KPI after a LB parameter of each rule, each KPI is set (e.g. RRC UE of each cell, ACT UE of each cell, Radio Resource block utilization of each cell, IP Throughput of each cell) |
| -KPI for LB parameter setting verification error threshold | Criterion for determining whether to report a LB parameter selection error for each rule, each KPI |

According to an embodiment, one LB parameter rule is combinations of a priority between frequency bands configured for each cell and thresholds related to handover, and may include the following contents:
(1) A1 TRIGGER QUANTITY: A1 threshold (RSRP/RSRQ)
(2) A2 TRIGGER QUANTITY: A2 threshold (RSRP/RSRQ)
(3) A3 TRIGGER QUANTITY: A3 threshold (RSRP/RSRQ)
(4) A5 TRIGGER QUANTITY: A5 threshold (RSRQ/RSRQ)
(5) Frequency band priority
(6) Expected cell capacity
(7) Load balancing scheme activation threshold

According to an embodiment, a LB rule priority may be used to designate a rule to be applied to LB parameter setting of a base station, first, among a plurality of rules when the LB parameter rule set includes a plurality of rules. When an error occurs in the high priority rule through verification, the base station may select a rule that is most similar to a current situation among low priority rules other than the high priority rule, and may perform LB parameter setting.

According to an embodiment, the KPI for prediction comparison among the items of the LB parameter rule set may be a KPI list that is used to determine prediction performance by comparing a result of KPI prediction of a LB server and a real monitoring result, that is, a list of parameters. This item may include KPIs that have nothing to do with the LB parameter setting, such as the number of an RRC connected UE, the number of an active UE, a cell coverage.

According to an embodiment, the KPI for LB parameter setting verification among the items of the LB parameter rule set may be KPIs which are targeted at determining performance of LB parameter setting by comparing expected performance of LB parameter selecting of the LB server and really monitored performance.

According to an embodiment, the LB parameter rule set may include a verification error threshold for each KPI to verify an error between a KPI for prediction comparison and an actual KPI.

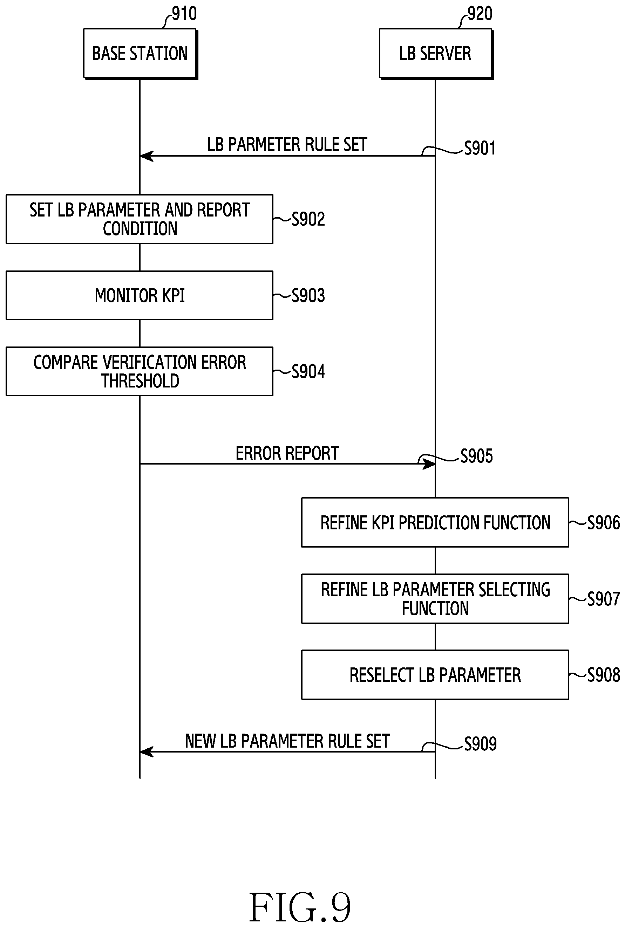

FIG. 9 illustrates an operation of a load balance parameter rule set monitoring function in a wireless communication system according to various embodiments of the disclosure.

In the embodiment of FIG. 9, a LB parameter rule set monitoring function of a server according to various embodiments of the disclosure is illustrated.

Referring to FIG. 9, at step S901, a LB server 920 may transmit a LB parameter rule set to a base station 910.

According to an embodiment, at step S902, the base station 910 may set a LB parameter and an error occurrence reporting condition.

According to an embodiment, at step S903, the base station 910 may monitor a KPI.

According to an embodiment, at step S904, the base station 910 may compare with a verification error threshold. In an embodiment, the base station 910 may set a LB parameter at a time that is defined according to the received LB parameter rule set, and may monitor a KPI.

According to an embodiment, the base station 910 may calculate an error by comparing a KPI for prediction comparison of the set rule with a real hourly KPI and hourly cell coverage information. In an embodiment, when the error between the KPI for prediction comparison of the set rule, that is, a high priority rule, and a real KPI exceeds a verification error threshold, the base station 910 may compare the real KPI and a KPI for prediction comparison of a low priority rule, and the verification error threshold. The base station 910 may find a low priority rule that is similar to a current KPI based on a result of comparison, and may change the base station LB parameter set to a LB parameter set of the low priority rule.

According to an embodiment, at step S905, the base station 910 may report an error to the LB server 920. In an embodiment, when an error between a LB parameter selecting performance determination KPI and a real KPI exceeds a verification error threshold, the base station 910 may immediately report the error to the LB server 920.

According to an embodiment, at step S906, the LB server 920 may update a KPI prediction function.

According to an embodiment, at step S907, the LB server 920 may update a LB parameter selecting function.

According to an embodiment, at step S908, the LB server 920 may reselect the LB parameter.

According to an embodiment, at step S909, the LB server 920 may transmit a new LB parameter rule set to the base station 910.

According to an embodiment, the LB server 920 may reflect each error in correcting a `hourly KPI information predictor' and a 'hourly coverage overlap predictor'. The LB server 920 may make a LB parameter rule based on a current KPI reported by the base station 910, and may deliver the LB parameter rule to the base station 910.

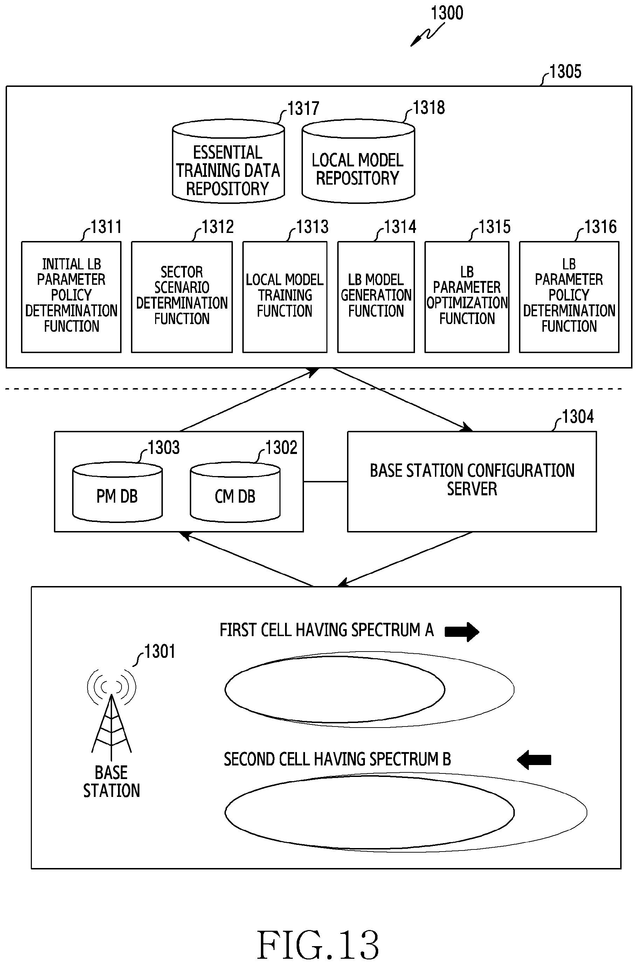

The base station 910 which receives the LB parameter rule made based on the current KPI may immediately reflect the received LB parameter rule. In an embodiment, the LB server 920 may correspond to a LB server 1305 of FIG. 13.

A method according to various embodiments of the disclosure has the following effects.
(1) Due to a "LB managed sector select function," a memory or computation power of a LB server may be effectively used. Accordingly, each server may be able to support more base stations.
(2) Due to a "load imbalance prediction function," it is possible to exactly predict a load imbalance by using past information retrieved from various information sources. Accordingly, it is possible to take preemptive measures before a load imbalance occurs.
(3) Due to the "load imbalance prediction function," it is possible to detect a load imbalance not only by a KPI of a base station but also by a service quality index.
(4) When an error occurs in predicting through a rule set scheme of a "LB parameter selecting function," it is possible to immediately take measures to the error.
(5) It is possible to refine a prediction function and a LB parameter rule selecting function through an error report function of a "load parameter rule set monitoring function".
(6) It is possible to take measures immediately through an error report function of the "load parameter rule set monitoring function" when an error occurs.

According to various embodiments of the disclosure, a server may have the following functions of:
(1) selecting a LB parameter selecting target sector based on a load imbalance record;
(2) collecting relevant information from a KPI database (DB), a cell coverage DB, a service quality DB;
(3) predicting a KPI, a cell coverage, service quality, and selecting a LB parameter based on prediction;
(4) selecting a KPI item for verifying an error and an error threshold;
(5) receiving a prediction error occurrence report from a base station;
(6) reselecting a LB parameter immediately based on a received prediction error report and delivering the LB parameter to a corresponding sector; and
(7) correcting a predictor and a LB parameter selecting function by reflecting a prediction error.

According to various embodiments of the disclosure, a base station has the following functions of:
(1) receiving a LB parameter rule set from a LB server, and accordingly, changing a LB parameter;
(2) reporting occurrence of a load imbalance to the LB server when the load imbalance occurs;
(3) comparing a predicted KPI and a current KPI and checking the error; and
(4) reporting a result of comparison the error to the LB server.

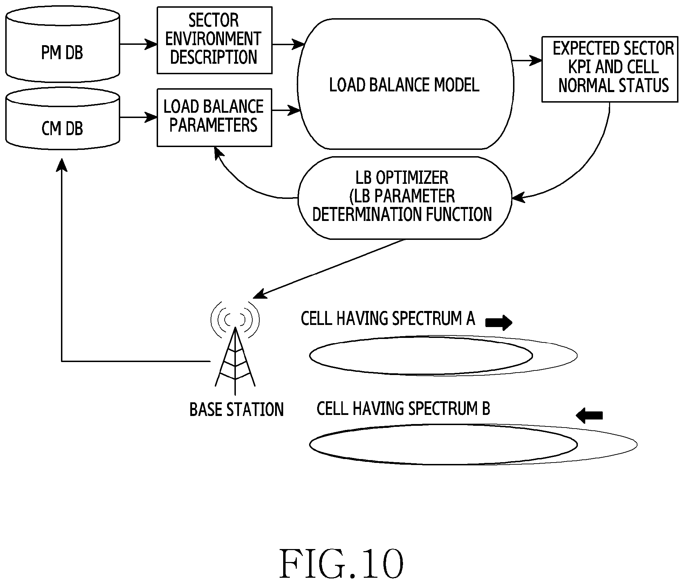

FIG. 10 illustrates an example of a process of performing load balancing in a wireless communication system according to various embodiments of the disclosure.

Various embodiments of the disclosure may aim at adjusting a LB parameter on a sector basis.

Various embodiments of the disclosure may aim at adjusting a LB parameter for a sector one time per unit time (for example, every hour or every 15 minutes).

According to various embodiments of the disclosure, a LB server may have a database in which KPI information (hereinafter, performance management (PB)) and a LB parameter adjustment history (hereinafter, configuration management (CM)) of a unit time of a cell included in a sector are stored.

According to various embodiments of the disclosure, PM and CM may indicate past information of a unit time of each sector as shown in table 2 presented below:

| Source DB | Detailed information items |
|---|---|
| PM | · # of UE in a sector (hereinafter, Sector UE) |
| | · Traffic size per UE (hereinafter, UE traffic) |
| | · # of UE of each cell (hereinafter, cell UE) |
| | · IP throughput of each cell (hereinafter, cell IPtput) |
| | · Per UE IP throughput of each cell (hereinafter, UE-Cell IPtput) |
| | · Downlink load (e.g. physical resource blocks (PRBs) usage) of each cell (hereinafter, cell DLLoad) |
| | · Avg. of RSRP measurement report of each cell (hereinafter, cell RSRP) |
| | · Avg. of RSRQ measurement report of each cell (hereinafter, cell RSRQ) |
| | · Avg. of Rank Index report of each cell (hereinafter, cell RI) |
| | · Ping-pong occurrence status of each cell (hereinafter, cell PP) |
| | · Coverage hole occurrence status of each cell (hereinafter, cell CH) |
| | · Excessive Inter After Activation occurrence status of each cell (hereinafter, cell IAA) |
| CM | Base station LB function setting parameter history |
| | · HO parameter (i.e. A1, A2, A3, A4, A5T1, A5T2 threshold of |
| | each carrier/carrier combination, carrier priority) history |
| | · Force handover setting-related parameter (e.g. rate of UE to apply forced handover of each cell) history |
| | · Cell selection/reselection parameter (e.g. search rate of each carrier, re/selection priority) history |

Referring to FIG. 10, a LB server according to various embodiments of the disclosure may include a load balance (LB) model (LBM) and a LB optimizer (LBO).

According to an embodiment, the LBM may predict an important KPI of a cell in a sector according to a change of a LB parameter.

According to an embodiment, the LBO may determine an optimal LB parameter to optimize an interest metric of a sector by using the LB model.

According to an embodiment, the LB server may provide sector environment description from a PM DB to the load balance model, and may provide LB parameters from a CM DB to the load balance model. In an embodiment, the load balance model may determine prediction sector KPIs and a cell normal status, and may determine an optimal LB parameter through the LBO. The LB server may perform load balancing with respect to a plurality of cells according to the optimal LB parameter which is determined through the LBO. Accordingly, a cell that has a spectrum A having relatively few loads may have loads increase, and a cell that has a spectrum B having relatively many loads may have loads reduced.

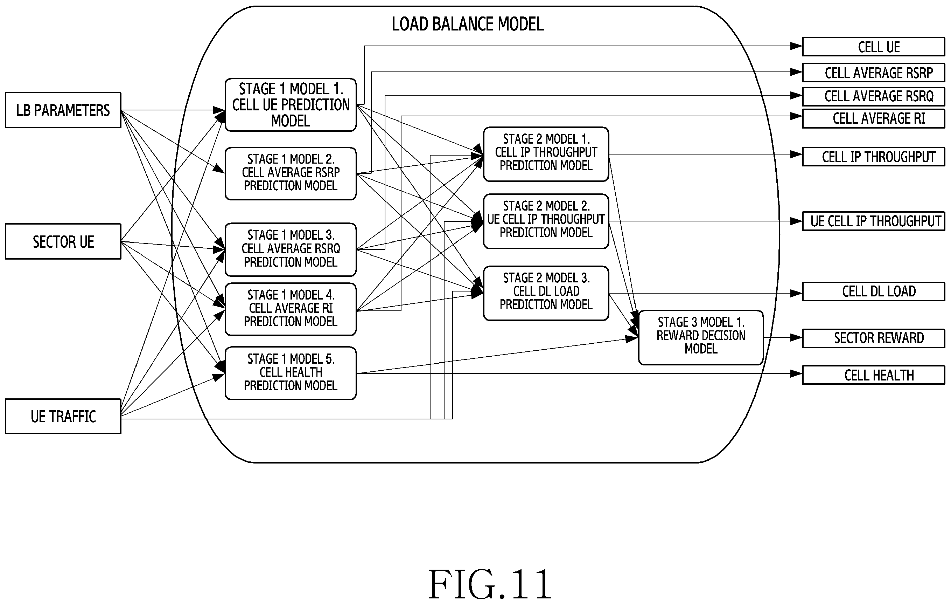

FIG. 11 illustrates an example of a load balance model in a wireless communication system according to various embodiments of the disclosure.

Referring to FIG. 11, a LBM according to an embodiment may include 9 specific models. For example, the LBM may include a cell UE prediction model, a cell average reference signal received power (RSRP) prediction model, a cell average reference signal received quality (RSRQ) prediction model, a cell average RI prediction model, a cell health measurement model, a cell IP throughput prediction model, a UE cell IP throughput prediction model, a cell DL load prediction model, and/or a reward decision model.

According to an embodiment, stage 1 model 1 (S1M1) may be a cell UE prediction model. Stage 1 model 2 (S1M2) may be a cell average RSRP prediction model. Stage 1 model 3 (S1M3) may be a cell average RSRQ prediction model. Stage 1 model 4 (S1M4) may be a cell average RI prediction model. Stage 1 model 5 (S 1M5) may be a cell health prediction model.

According to an embodiment, stage 2 model 1 (S2M1) may be a cell IP throughput prediction model. Stage 2 model 2 (S2M2) may be a UE cell IP throughput prediction model. Stage 2 model 3 (S2M3) may be a cell DL load prediction model. Stage 3 model 1 (S3M1) may be a reward decision model.

According to an embodiment, the LB model may perform a function of predicting output information when input information as shown in table 3 presented below is given. Each piece of output information may be outputs of local prediction functions constituting the LBM.

**[Table 3]**

| Classification | Information | Descriptions |
|---|---|---|
| Input | LB Parameter | |
| | Sector UE | |
| | UE traffic | |
| Output | Cell UE | Output of S1M1 of table 4 |
| | Cell Avg. RSRP | Output of S1M2 of table 4 |
| | Cell Avg. RSRQ | Output of S1M3 of table 4 |
| | Cell Avg. RI | Output of S1M4 of table 4 |
| | Cell IPTput | Output of S1M5 of table 4 |
| | UE Cell IPTput | Output of S2M1 of table 4 |
| | Cell DLLoad | Output of S2M2 of table 4 |
| | Cell Health | Output of S2M3 of table |
| | | 4 |
| | Reward | Output of S3M1 of table 4 |

Referring to FIG. 11, the LBM may include 9 specific models and an input and an output of each of the specific models may be connected as shown in FIG. 11. Functions of the specific models are shown in table 4 presented below:

**[Table 4]**

| Index | Model Name | Descriptions of input/output and functions of specific models |
|---|---|---|
| S1M1 | Cell UE prediction model | a function of predicting how many UEs are in each cell belonging to a sector when Sector UE, LB parameter, UE traffic are given as an input of the LBM |
| S1M2 | Cell avg. RSRP prediction model | a function of predicting what the average RSRP of each cell belonging to a sector is when LB parameter is given as an input of the LBM |
| S1M3 | Cell avg. RSRQ prediction model | a function of predicting what the average RSRQ of each cell belonging to a sector is when Sector UE, LB parameter, UE traffic are given as an input of the LBM |
| S1M4 | Cell agv. RI prediction model | A function of predicting what the average RI of each cell belonging to a sector is when Sector UE, LB parameter, UE traffic are given as an input of the LBM |
| S1M5 | Cell Health prediction model | a function of predicting whether Ping-pong, Excessive Inter After Activation or Coverage hole in a sector occurs in each cell when Sector UE, LB parameter, UE traffic are given as an input of the LBM Embodiment) |
| | | when it is predicted that an abnormal phenomenon does not occur, Cell Health=1 is outputted, and, when it is predicted that an abnormal phenomenon occurs, Cell Health=0 |
| | | is outputted. |
| S2M1 | Cell IP tput prediction model | a function of predicting how much Cell IPTput of each cell belonging to a sector is when UE traffic is given as inputs of S1M1, S1M2, S1M3, S1M4 and the LBM |
| S2M2 | Cell UE Cell IP tput prediction model | a function of predicting how much UE Cell IPTput of each cell belonging to a sector is when UE traffic is given as inputs of S1M1, S1M2, S1M3, S1M4 and the LBM |
| S2M3 | Cell DLLoad prediction model | a function of predicting how much UE Cell IPTput of each cell belonging to a sector is when UE traffic is given as inputs of S1M1, S1M2, S1M3, S1M4 and the LBM |
| S3M1 | Reward decision model | a function of calculating prediction values of S2M1, S2M2, S2M3 and the presence/absence of S1M5 as a metric in which a network operator is interested |

All of the specific models except for S3M1 may be based on the following three types of models or may be based on a model combining at least one of the following three types of models.
(1) Model 1- Neural network regression model: This model may be a model that learns by using data corresponding to input and output items of S 1M2 which are stored in PM and CM;
(2) Model 2-Leaming coefficient equation model: An equation may be pre-defined, and this model may be a model that learns only coefficient of the equation by using data corresponding to input and output items of S 1M2 which are stored in PM and CM;
(3) Model 3-Fixed coefficient equation model: This model may be a model that uses a used equation pre-defined between input/output.

According to an embodiment, S3M1 may calculate an interested reward, based on outputs of S2M1, S2M2, S2M3 which are results of KPI prediction of each cell of the sector, and a result of predicting whether there is an abnormality in a cell of the sector. In this case, an equation may be defined by a network operator. In this case, the equation may include the following equation described in table 5. Table 5 is an embodiment of an equation related to a cell IP throughput.

**[Table 5]**

| |
|---|
| ```
If cell Health=1
     then Reward=f(Cell IP tput, Cell DLLoad, UE Cell IPtput)
 else
     then Reward=-1
``` |

An embodiment of a calculation formula f ( ) in table 5 may include the following calculation schemes or a combination thereof:
(1) Min {Cell IPTput}
(2) Fairness index {Cell IPTput}
(3) Min {UE Cell IPTput}
(4) Fairness index {UE Cell IPTput}
(5) Fairness index {DLload}

According to an embodiment, an LBO may be connected with the LBM as shown in FIG. 10, and may perform a function of finding a LB parameter of maximum reward performance. The LBO may have a policy neural network. The LBO may discover an optimal LB parameter according to the following order.
(1) Step 1: The LBO may perform sparse grid search in all LB parameter areas to select an initial operating point.
(2) Step 2: The LBO may select a LB parameter that shows a highest reward among results of performing the grid search as an initial operation.
(3) Step 3: The LBO may initialize a policy neural network in the LBO by the initial operation selected at step 2.
(4) Step 4: The LBO may start the initial operation and may train a policy neural network in the LBM. In training the internal policy neural network, a LB parameter may be determined by using the policy neural network as many times as a defined number of times of training, which is an output of the LBO, and updating of the policy neural network may be repeated by using the determined LB parameter and a reward.

The LB server may apply a LB parameter which is an output from the policy neural network which finishes the number of times of training defined in the LBO to the sector.

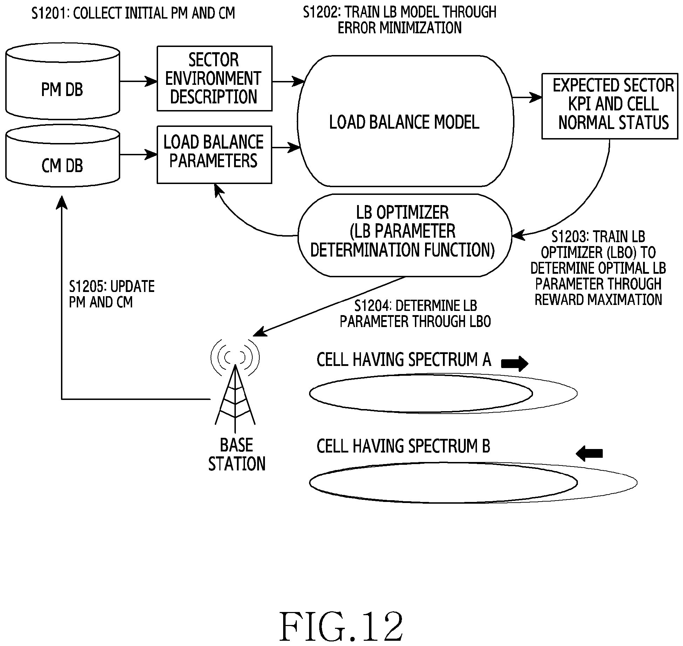

FIG. 12 illustrates an example of a process of performing load balancing in a wireless communication system according to embodiments of the disclosure.

Referring to FIG. 12, at step S 1201 according to an embodiment, a LB server may collect initial information. In an embodiment, the LB server may collect hourly information of a PM DB and a CM DB by executing a base policy (for example, an existing rule)-based LB parameter decision function or a default LB parameter set on a target sector.

According to an embodiment, the LB server may acquire performance management (PM) information and configuration management (CM) information on a sector managed by the LB server. The PM information may include environmental information of the sector, and the CM information may include one or more load balance (LB) parameters regarding the sector.

According to an embodiment, at step S1202, the LB server may train a neural network regression model of a detailed function to minimize an error between an output of a detailed configuration function of a LBM except for S3M for the target sector, and data stored in the PM DB, the CM DB, and may determine an equation of the detailed function and may determine the detailed function of the LBM.

According to embodiments, when the detailed function is generated, the LB server may make a LBM of the target sector by connecting the detailed function. According to an embodiment, the LB server may train a load balance model (LBM) based on the PM information and the CM information, and the LBM may predict a key performance index (KPI) regarding the sector.

According to embodiments, at step S1203, the LB server may train an LBO for determining an optimal LB parameter as many times as a defined number of times of training on the LBM made at step S 1202. According to an embodiment, the LB server may train the load balance optimizer (LBO) for determining an optimal LB parameter regarding the sector, based on the LBM.

According to embodiments, at step S1204, the LB server may operate a function of determining an optimal LB parameter at the target sector by using the LBO trained at step S 1203. The LB server may perform load balancing with respect to cells of a plurality of spectra based on the determined optimal LB parameter. According to an embodiment, the LB server may determine the optimal LB parameter regarding the sector by using the LBO. According to an embodiment, the LB server may transmit the optimal LB parameter for load balancing to a base station of the sector.

According to embodiments, at step S1205, the LB server may store PM data and CM data which are a result at step S 1204 in the PM DB and the CM DB. Thereafter, the LB server may repeat steps S 1202 to S 1205 on a unit time basis.

According to an embodiment, the PM information may include the number of a UE in the sector, a size of traffic per UE, the number of a UE of each cell, an internet protocol (IP) throughput of each cell, a UE IP throughput of each cell, a downlink load of each cell, average received signal received power (RSRP) of each cell, average received signal received quality (RSRQ) of each cell, an average rank indicator (RI) of each cell, a ping-pong occurrence status of each cell, and/or a coverage hole occurrence status of each cell. According to an embodiment, the CM information may include a handover (HO) parameter, a forced handover setting-related parameter history, and/or a cell selection parameter history.

According to an embodiment, the LBM may include 9 specific models, and the 9 specific models may include a cell UE prediction model, a cell average RSRP prediction model, a cell average RSRQ prediction model, a cell average RI prediction model, a cell health prediction model, a cell IP throughput prediction model, a UE cell IP throughput prediction model, a cell DL load prediction model, and or a reward decision model.

According to an embodiment, the 9 specific models may be based on at least one of a neural network regression model, a learning coefficient equation model or a fixed coefficient equation model.

According to an embodiment, the LBM may be configured to calculate a reward based on a result of predicting a KPI for each cell of the sector and a result of predicting whether an abnormality occurs for each cell of the sector, and the LBO may be configured to calculate a LB parameter for maximizing the reward for the sector. According to an embodiment, the LBO may be configured to determine a LB parameter by using an internal policy neural network of the LBM, and to repeat updating of the policy neural network by using the reward based on the determined LB parameter.

Through various embodiments of the disclosure, in an environment where a plurality of cells using different frequency bands within one sector of a mobile communication network coexist, an optimal LB parameter suitable for a situation of each sector may be determined, and load balancing may be performed based on the determined LB parameter.

Methods based on the claims or the embodiments disclosed in the disclosure may be implemented in hardware, software, or a combination of both.

When implemented in software, a computer readable storage medium for storing one or more programs (software modules) may be provided. The one or more programs stored in the computer readable storage medium are configured for execution performed by one or more processors in an electronic device. The one or more programs include instructions for allowing the electronic device to execute the methods based on the claims or the embodiments disclosed in the disclosure.

The program (the software module or software) may be stored in a random access memory, a non-volatile memory including a flash memory, a read only memory (ROM), an electrically erasable programmable read only memory (EEPROM), a magnetic disc storage device, a compact disc-ROM (CD-ROM), digital versatile discs (DVDs) or other forms of optical storage devices, and a magnetic cassette. Alternatively, the program may be stored in a memory configured in combination of all or some of these storage media. In addition, the configured memory may be plural in number.

Further, the program may be stored in an attachable storage device capable of accessing the electronic device through a communication network such as the Internet, an Intranet, a local area network (LAN), a wide LAN (WLAN), or a storage area network (SAN) or a communication network configured by combining the networks. The storage device may access via an external port to a device which performs the embodiments of the disclosure. In addition, an additional storage device on a communication network may access to a device which performs the embodiments of the disclosure.

In the above-described specific embodiments of the disclosure, elements included in the disclosure are expressed in singular or plural forms according to specific embodiments. However, singular or plural forms are appropriately selected according to suggested situations for convenience of explanation, and the disclosure is not limited to a single element or plural elements. An element which is expressed in a plural form may be configured in a singular form or an element which is expressed in a singular form may be configured in plural number.

While specific embodiments have been described in the detailed descriptions of the disclosure, it will be understood by those skilled in the art that various changes in form and details may be made therein without departing from the spirit and scope of the disclosure. Therefore, the scope of the disclosure is defined not by explained embodiments but by the appended claims and equivalents to the claims.

FIG. 13 is a view to explain a wireless communication system including a LB server according to an embodiment.

Referring to FIG. 13, a wireless communication system 1300 according to an embodiment may include a base station 1301, a CM DB 1302, a PM DB 1303, a base station configuration server 1304, and/or a LB server 1305. In an embodiment, the LB server 1304 may include components corresponding to the server 101 of FIG. 1. For example, the LB server 1304 may include a transceiver 210, a storage unit 220, and/or a controller 230.

According to an embodiment, a plurality of cells included in substantially the same sector may have different spectra. For example, a first cell may have a spectrum A, and a second cell may have a spectrum B. The spectrum B may be relatively wider than the spectrum A.

According to an embodiment, the CM DB 1302 may store CM information applied to the base station 1301, and the PM DB 1303 may store PM information that is acquired by the base station 1301 for a designated period, based on designated CM information. For example, the CM information may include a handover parameter of the base station and/or a selection parameter (for example, a parameter for selecting or reselecting cells to be used in communication) regarding cells in a sector. For example, the PM information may include information on the number of a UE in a sector, information on traffic of UE, information on the number of a UE of each of the plurality of cells in a sector, information on throughputs of cells in a sector (for example, a cell IP throughput), information on downlink loads of cells, information on average reference signal received power (RSRP) of cells, information on average reference signal received quality (RSRS) of cells, information on a reward of an information sector for cell health, and/or information on a rank index (RI) of cells.

According to an embodiment, the CM DB 1302 may transmit stored CM information to the base station 1301, the base station configuration server 1304, and/or the LB server 1305. The CM DB 1302 may receive CM information from the base station 1301, the base station configuration server 1304, and/or the LB server 1305. In an embodiment, the PM DB 1303 may transmit stored PM information to the base station 1301, the base station configuration server 1304, and/or the LB server 1305. The PM DB 1303 may receive PM information from the base station 1301, the base station configuration server 1304, and/or the LB server 1305.

According to an embodiment, the base station configuration server 1304 may change or refine setting of the base station, based on CM information (or a LB parameter policy including CM information) received from the LB server 1305. For example, the base station configuration server 1304 may change or refine a LB parameter of the base station, based on CM information (or a LB parameter policy including CM information) received from the LB server 1305. The changed or refined LB parameter may be maintained for the whole designated period or may be maintained in least some time slots of a designated period (for example, an operating period of the base station).

According to an embodiment, the LB server 1305 may include an initial LB parameter policy determination function 1311, a sector scenario determination function 1312, a local model training function 1313, a LB model generation function 1314, a LB parameter optimization function 1315, and/or a LB parameter policy determination function 1316. Functions explained in the disclosure may correspond to software modules, respectively, and may be executed or performed by at least one processor in the LB server 1305. For example, at least one processor of the LB server 1305 may perform the initial LB parameter policy determination function.

Functions included in the LB server 1305 explained in the disclosure are only for indicating software modules and may be replaced with various terms. For example, the initial LB parameter policy determination function 1311 may be replaced with an initial LB parameter policy determination module 1311. For example, the sector scenario determination function 1312 may be replaced with a sector scenario determination module 1312.

Operations of the LB server 1305 described in the disclosure may be understood as operations of at least one processor substantially included in the LB server 1305 or operations of at least one processor by instructions stored in a non-transitory storage medium.

According to an embodiment, the initial LB parameter policy determination function 1311 may be referred to as a function of determining a parameter policy by which a load imbalance of the sector is minimized, among prepared or predetermined initial parameter policies. For example, the LB server 1305 may determine a direction to move a traffic load, based on PM information of the sector. For example, the LB server 1305 may determine a direction to move communication traffic is moved, based on PM information of each of the plurality of cells in the sector. For example, the LB server 1305 may move a traffic load of the first cell to the second cell when it is determined that the traffic load of the first cell is larger than a traffic load of the second cell based on first PM information of the first cell and second PM information of the second cell.

According to an embodiment, the sector scenario determination function 1312 may be referred to as a function of determining an environmental factor in the sector, whether to apply a LB parameter change, and/or a LB parameter application rate, based on PM information of the sector collected for a designated period. For example, the LB server 1305 may determine an environmental factor in the sector, whether to apply a LB parameter change, and/or a LB parameter application rate, based on PM information of the sector collected for a designated period (for example, a first period). In an embodiment, the environmental factor in the sector may include the number of the UE in the sector for a designated period (for example, the first period) and/or an average of traffic of UEs of each cell. In an embodiment, whether to apply a LB parameter change may be referred to as whether to apply a LB parameter determined at the LB server 1305. The LB parameter application rate may be referred to as a rate at which a determined LB parameter is applied for a designated period (for example, a second period). In an embodiment, the second period may be referred to as a period after the first period.

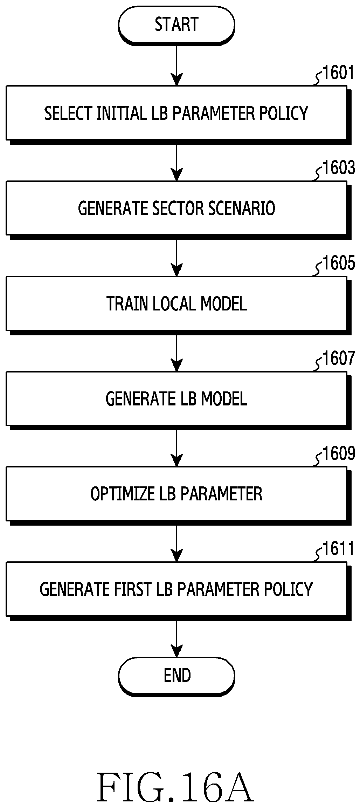

For example, the first period and/or the second period may refer to 14 days, respectively. The sector scenario determination function 1312 will be described in detail with reference to FIG. 16A. For example, the second period may arrive after a designated time from the first period. That is, there may be a time interval between the first period and the second period.

According to an embodiment, the local model training function 1313 may be referred to as a function of training a local model based on PM information and CM information of the sector collected for a designated period (for example, the first period). In an embodiment, the PM information of the sector collected for the designated period (for example, the first period) may include PM data of each time slot of the designated period (for example, the first period). The CM information of the sector collected for a designated period (for example, the first period) may include CM data of each time slot of the designated period. For example, the LB server 1305 may input, to a local model of the LB model, CM information (for example, information on a load balance parameter) of the sector collected for a designated period, information on the number of the UE in the sector, and information of traffic of UE. In an example, as the CM information, the information on the number of the UE in the sector, and the information on UE traffic are inputted to the local model, at least one PM value indicating communication performance of the sector may be outputted.

For example, at least one PM value indicting communication performance of the sector may include the number of the UE o each cell, cell average RSRP, cell average RSRQ, a cell average RI, a cell IP throughput, an IP throughput of a cell, a downlink (DL) load of a cell, a sector reward and/or cell health. The sector reward and the cell health will be described in detail with reference to FIGS. 11, 16B, and 21. For example, at least one PM value indicating communication performance of the sector may be referred to as a key performance index (KPI) described above in FIG. 5.

According to an embodiment, the LB model generation function 1314 may be referred to as a function of generating a LB model by using trained local models. For example, the LB server 1305 may connect local models stored in the local model repository 1318. In an embodiment, the LB server 1305 may generate a LB model by inputting a sector environmental factor (for example, the number of the UE in the sector and/or an average of traffic of UE of each cell) to the connected local models. In an embodiment, the generated LB model may be connected with the LB parameter optimization function 1315, and, when the LB parameter optimization function 1315 inputs ae first LB parameter to the generated LB model, the LB model may output PM data corresponding to the first LB parameter.

According to an embodiment, the LB parameter optimization function 1315 may be referred to as a function of identifying a reward by using a LB model. For example, the LB server 1305 may input a plurality of candidate LB parameters to the LB model. The LB server 1305 may acquire a plurality of rewards outputted from the LB model. The plurality of rewards outputted may correspond to the plurality of candidate LB parameters, respectively. In an example, the LB server 1305 may identify a candidate LB parameter corresponding to the greatest reward among the plurality of rewards. The identified candidate LB parameter may correspond to a LB parameter which is applied to a base station for the second period.

According to an embodiment, a reward may be referred to as an index for substantially evaluating communication performance in a sector. Accordingly, as a reward corresponding to a LB parameter is higher, the corresponding LB parameter may be regarded as being more suitable as a parameter applied to the next period (for example, the second period) to enhance communication performance. In an embodiment, the LB parameter optimization function 1315 may correspond to the LB optimizer described above in FIG. 12.

According to an embodiment, the LB parameter policy determination function 1316 may be referred to as a function of generating a LB parameter policy to be applied to the base station. For example, the function of generating the LB parameter policy may be referred to as a function of generating a LB parameter policy including a LB parameter corresponding to a length of a period (or next operating period of the base station) to which an optimal LB parameter is applied, based on an optimal LB parameter and an optimized learning record, which will be described in operations 1609 to 1611 of FIG. 16A.

For example, the LB parameter policy determination function 1316 may generate a LB parameter policy including LB parameters corresponding to a length of the next operating period (for example, the second period) of the base station, based on first CM information and first PM information of the first period. In an example, the LB parameters corresponding to the length of the operating period of the base station may mean that an LB parameter is substantially generated in each time slot of the operating period. For example, the LB parameters corresponding to the length of the operating period of the base station may mean that LB parameters corresponding to the first time slot to the 336^{th} time slot one by one are generated when it is assumed that the first period includes the first time slot to the 336^{th} time slot.

According to an embodiment, the LB parameter policy generated by the policy determination function 1316 may be directly transmitted from the LB server 1305 to the base station 1301, or may be transmitted from the LB server 1305 to the base station 1301 through the base station configuration server 1304.

For example, the LB server 1305 may determine a LB parameter policy by using a LB parameter application rate which is determined at the sector scenario determination function 1312, an optimal LB parameter value which is determined at the LB parameter optimization function 1315, and a LB parameter learning record. In an embodiment, the LB parameter policy may include a LB parameter that will be set in the base station according to each time slot for the second period.

According to an embodiment, the LB server 1305 may include an essential training data repository 1317 and/or a local model repository 1318. In the disclosure, a software or hardware position where data or models are stored is referred to as a repository, but this is merely an example. For example, the LB server 1305 may include a memory and the essential training data repository 1317 and the local model repository 1318 may be explained as a concept included in the memory.

According to an embodiment, the essential training data repository 1317 may store essential training data that is used for training local models included in a LB model. The essential training data repository 1317 of the LB server 1305 may include PM information and CM information for a period designated for each sector and/or each cell. For example, the essential training data repository 1317 may store PM information which includes PM data collected at the base station 1301 for a designated period (for example, the first period), and CM information which is applied to the base station 1301 for a designated period.

According to an embodiment, the local model repository 1318 may store local models for each sector which are trained through the local model training function 1313. The local model repository 1318 may deliver a local model of a sector requested among the local models of each sector which are stored in response to a request of the LB model generation function 1314 to the LB model generation function 1314.

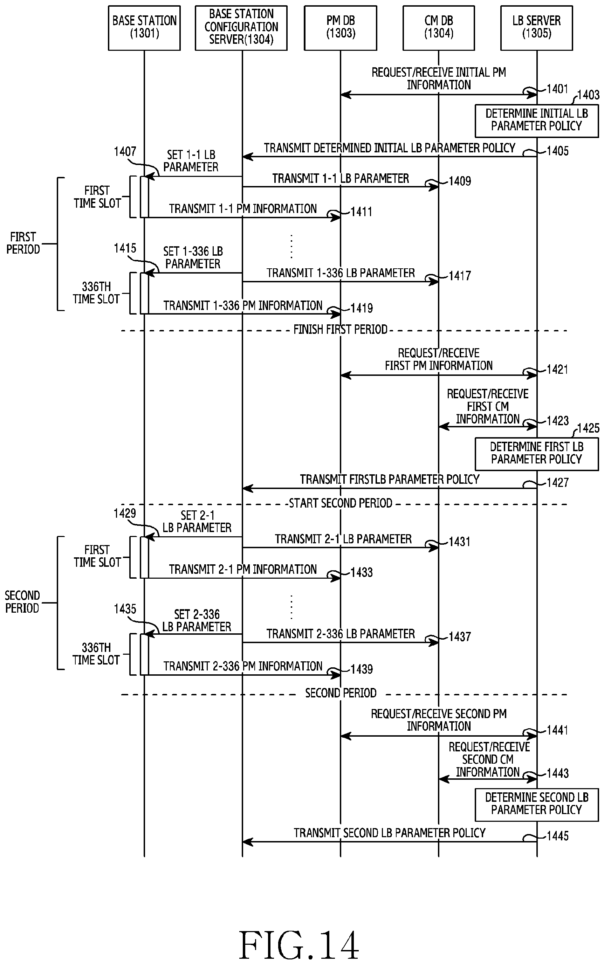

FIG. 14 is a view to explain a method for determining and applying a LB parameter according to an embodiment.

Referring to FIG. 14, in operation 1401, the LB server 1305 according to an embodiment may request and receive initial PM information from the PM DB 1303. For example, the LB server 1305 may request initial PM information of the base station 1301 from the PM DB 1303, and the PM DB 1303 may transmit initial PM information including initial PM data to the LB server 1305. For example, the initial PM information may correspond to PM information before a LB model of the LB server 1305 is applied.

According to an embodiment, in operation 1403, the LB server 1305 may determine an initial LB parameter policy (or a LB policy). For example, the LB server 1305 may determine the initial LB parameter policy by using the initial LB parameter policy determination function 1311.

For example, the LB server 1305 may determine a direction to move a communication traffic load, based on the received initial PM information. The LB server 1305 may compare initial PM information of the first cell and initial PM information of the second cell, and, when a first traffic load of the first cell is greater than a second traffic load of the second cell, the LB server 1305 may move communication traffic of the first cell to the second cell. In an example, the initial LB parameter policy may include information on a direction to move a communication traffic load. In an embodiment, the initial LB parameter policy may include a LB parameter value that the base station 1301 will use in each time slot.

For example, the LB parameter policy may include information on an identification (ID) of the sector, information on the first period, information on the number of at least one UE in the sector, information on traffic of the at least one UE, information on whether the base station applies the second load balance parameter for the second period, and/or information on a rate at which the second load balance parameter is applied for the second period.

According to an embodiment, in operation 1405, the LB server 1305 may transmit the determined initial LB parameter policy to the base station configuration server 1304. FIG. 14 illustrates that the LB server 1305 transmits a predetermined initial LB parameter policy to the base station 1301 through the base station configuration server 1304, but this is merely an example. Accordingly, the LB server 1305 may directly transmit the predetermined initial LB parameter policy to the base station 1301.

According to an embodiment, the base station configuration server 1304 may set a first LB parameter for the base station 1301 based on the received initial LB parameter policy. The first LB parameter generated based on the initial LB parameter policy may vary according to a time slot. For example, when it is assumed that the first period is 14 days and an application time of a LB parameter is 1 hour, the first period may be divided into total 336 time slots (14x24=336). In an example, the first LB parameter generated based on the initial LB parameter policy may be divided by time slots of the first period. For example, a 1-1 LB parameter may be applied in the first time slot and a 1-336 LB parameter may be applied in the 336^{th} time slot.

According to an embodiment, the base station configuration server 1304 may set the first LB parameter for the base station 1301 in each time slot. For example, in operation 1407, the base station configuration server 1304 may apply the 1-1 LB parameter to the base station 1301 in the first time slot. For example, in operation 1415, the base station configuration server 1304 may apply the 1-336 LB parameter to the base station 1301 in the 336^{th} time slot.

According to an embodiment, the base station configuration server 1304 may transmit (or report) the first LB parameter to the CM DB 1302. For example, in operation 1409, the base station configuration server 1304 may transmit the 1-1 LB parameter to the CM DB 1302. For example, in operation 1417, the base station configuration server 1304 may transmit the 1-336 LB parameter to the CM DB 1302. In an embodiment, the first LB parameter transmitted to the CM DB 1302 may be stored in the CM DB 1302. For example, the 1-1 LB parameter, the 1-2 LB parameter, ..., and the 1-336 LB parameter may be stored in the CM DB 1302.

According to an embodiment, when each time slot finishes, the base station 1301 may transmit, to the PM DB 1303, first PM information which is collected at the base station 1301 for each time slot. For example, in operation 1411, when the first time slot finishes, the base station 1301 may transmit 1-1 PM information collected at the base station 1301 for the first time slot to the PM DB 1303. For example, in operation 1419, when the 336^{th} time slot finishes, the base station 1301 may transmit 1-336 information collected at the base station 1301 for the 336^{th} time slot to the PM DB 1303.

According to an embodiment, in operation 1421, the LB server 1305 may request the first PM information which is collected for the first period from the PM DB 1303, and may receive the first PM information from the PM DB 1303. In an embodiment, the first PM information may include PM information in each time slot within the first period. For example, the first PM information may include 1-1 PM information of the first time slot, 1-2 PM information of the second time slot, ..., and/or 1-336 PM information of the 336^{th} time slot.

According to an embodiment, in operation 1423, the LB server 1305 may request first CM information which is applied to the base station 1301 for the first period from the CD DM 1302, and may receive the first CM information from the CM DB 1302. In an embodiment, the first CM information may include CM information in each time slot within the first period. Second CM information may include 1-1 CM information of the first time slot, 1-2 CM information of the second time slot, ..., and/or 1-336 CM information of the 336^{th} time slot.

According to an embodiment, in operation 1425, the LB server 1305 may determine a first LB parameter policy based on the first CM information and the first PM information. In an embodiment, the first LB parameter policy may include a second LB parameter to be applied to the base station 1301 for the second period. For example, the LB server 1305 may determine the second LB parameter to be applied to the base station 1301 for the second period, based on the first CM information and the first PM information. The determined second LB parameter may vary according to each time slot of the second period.

According to an embodiment, in operation 1427, the LB server 1305 may transmit the determined first LB parameter policy to the base station configuration server 1304. The base station configuration server 1304 may refine or change a LB parameter policy based on the received first LB parameter policy. For example, the base station configuration server 1304 may refine or change the initial LB parameter policy to the first LB parameter policy.

According to an embodiment, the base station configuration server 1304 may set the second LB parameter for the base station 1301, based on the received first LB parameter policy. The second LB parameter generated based on the first LB parameter policy may vary according to each time slot of the second period. For example, when it is assumed that the second period is 14 days and an application time of a LB parameter is 1 hour, the second period may be divided into total 336 time slots (14x24=336). In an example, the second LB parameter generated based on the first LB parameter policy may be divided by time slots of the second period. For example, a 2-1 LB parameter may be applied in the second time slot and a 2-336 LB parameter may be applied in the 336^{th} time slot.

According to an embodiment, the base station configuration server 1304 may set (or apply) the second LB parameter for the base station 1301 in each time slot. For example, in operation 1429, the base station configuration server 1304 may apply the 2-1 LB parameter to the base station 1301 in the first time slot of the second period. For example, in operation 1435, the base station configuration server 1304 may apply the 2-336 LB parameter to the base station 1301 in the 336^{th} time slot of the second period.

According to an embodiment, the base station configuration server 1304 may transmit the second LB parameter to the CM DB 1302. For example, in operation 1431, the base station configuration server 1304 may transmit the 2-1 LB parameter to the CM DB 1302. For example, in operation 1437, the base station configuration server 1304 may transmit the 2-336 LB parameter to the CM DB 1302. In an embodiment, the second LB parameter transmitted to the CM DB 1302 may be stored in the CM DB 1302. For example, the 2-1 LB parameter, the 2-2 LB parameter, ..., and the 2-336 LB parameter may be stored in the CM DB 1302.

According to an embodiment, when each time slot finishes, the base station 1301 may transmit, to the PM DB 1303, second PM information which is collected at the base station 1301 for each time slot. For example, in operation 1433, when the first time slot of the second period finishes, the base station 1301 may transmit 2-1 PM information collected at the base station 1301 for the first time slot of the second period to the PM DB 1303. For example, in operation 1439, when the 336^{th} time slot of the second period finishes, the base station 1301 may transmit 2-336 information collected at the base station 1301 for the 336^{th} time slot of the second period to the PM DB 1303.

According to an embodiment, in operation 1441, the LB server 1305 may request the second PM information which is collected for the second period from the PM DB 1303, and may receive the second PM information from the PM DB 1303. In an embodiment, the second PM information may include PM information in each time slot within the second period. For example, the second PM information may include 2-1 PM information of the first time slot of the second period, 2-2 PM information of the second time slot, ..., and/or 2-336 PM information of the 336^{th} time slot.

According to an embodiment, in operation 1443, the LB server 1305 may request second CM information which is applied to the base station 1301 for the second period from the CD DM 1302, and may receive the second CM information from the CM DB 1302. In an embodiment, the second CM information may include CM information in each time slot of the second period. For example, the second CM information may include 2-1 CM information of the second time slot of the second period, 2-2 CM information of the second time slot, ..., and/or 2-336 CM information of the 336^{th} time slot.

According to an embodiment, in operation 1443, the LB server 1305 may determine a third LB parameter policy based on the second CM information and the second PM information. In an embodiment, the third LB parameter policy may include a third LB parameter to be applied to the base station 1301 for a third period. For example, the LB server 1305 may determine the third LB parameter to be applied to the base station 1301 for the third period, based on the second CM information and the second PM information. The determined third LB parameter may vary according to each time slot of the third period.

According to an embodiment, in operation 1445, the LB server 1305 may transmit the determined third LB parameter policy to the base station configuration server 1304.

Although FIG. 3 of the disclosure illustrates only operations 1441 to 1445, operations corresponding to operations 1429 to 1439 of FIG. 3 may be performed after operation 1445. For example, after operation 1445, the LB server 1305 may acquire second CM information (for example, the second LB parameter) and second PM information for the second period for the sector. The LB server 1305 may train the LB model based on the second CM information and the second PM information. The LB server 1305 may determine the third LB parameter to be used for distribution of the communication traffic in the sector of the third period, based on the trained load balance model. In an example, the base station configuration server 1304 may receive the second LB parameter policy including the third LB parameter, and may set the third LB parameter for the base station 1301 based on the second LB parameter policy. In an example, the base station configuration server 1304 may transmit third CM information to the CM DB 1302, and may transmit third PM information to the PM DB 1303.

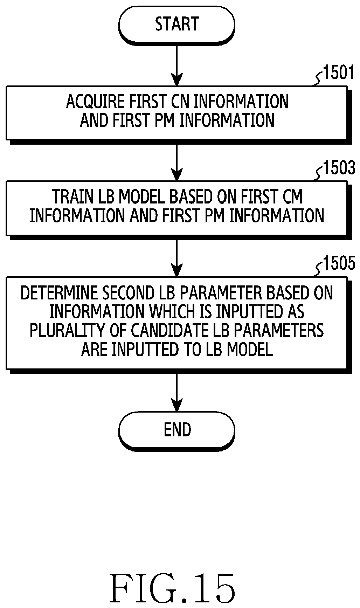

FIG. 15 is a flowchart to explain a method for determining a first LB parameter according to an embodiment.

Referring to FIG. 15, in operation 1501, the LB server 1305 according to an embodiment may acquire first CM information and first PM information. For example, the base station configuration server 1304 may set a first LB parameter for the base station 1301 based on a received initial LB parameter policy. The base station 1301 to which the first LB parameter is applied may collect the first PM information for the first period, and the collected first PM information may be stored in the PM DB 1303. The first CM information (for example, the first LB parameter) applied to the base station 1301 for the first period may be stored in the CM DB 1302. In an example, the LB server 1305 may acquire the first PM information from the PM DB 1303, and the LB server 1305 may acquire the first CM information from the CM DB 1302. In an example, the initial LB parameter policy may be predetermined. Operation 1501 of FIG. 15 may correspond to operation 1421 and operation 1423 of FIG. 14. Accordingly, although not shown in FIG. 15, operations 1401 to 1419 of FIG. 14 may be performed before operation 1501, and as a result, the embodiment of FIG. 14 and the embodiment of FIG. 15 may be coupled.

Although not shown in FIG. 15, an operation of transmitting, by the LB server 1305, information on a predetermined LB parameter policy (or an initial LB parameter policy) to the base station 1301 or the base station configuration server 1304 may be added before operation 1501. The operation of transmitting, by the LB server 1305, the information on the predetermined LB parameter policy to the base station or the base station configuration server 1304 may correspond to operation 1405 of FIG. 14.

According to an embodiment, in operation 1503, the LB server 1305 may train a LB model based on the acquired first CM information and first PM information. For example, the LB server 1305 may use the first CM information (for example, the first LB parameter), information on the number of the UE in a sector and/or information on traffic of UE as input data of the LB model. In an example, as the first CM information, the information on the number of the UE in the sector and/or the information on the traffic of UE are inputted, the LB model may output at least one PM value indicating communication performance of the sector.

According to an embodiment, the information on the number of the UE in the sector and the information on the traffic of UE may be included in the first PM information. That is, as input data of the LB model, the first CM information and the information on the number of the UE in the sector and/or the information on the traffic of UE in the first PM information may be used. As output data of the LB model, information in the first PM information except for the information on the number of the UE in the sector and the information on the traffic of UE may be outputted.

For example, the output data of the LB model may include information on the number of the UE in the sector, information on the traffic of UE, information on throughputs of cells in the sector, information on downlink loads of cells, information on reference signal received power (RSRP) of cells, information on reference signal received quality (RSRS) of cells, and/or information on a rank index (RI) of cells.

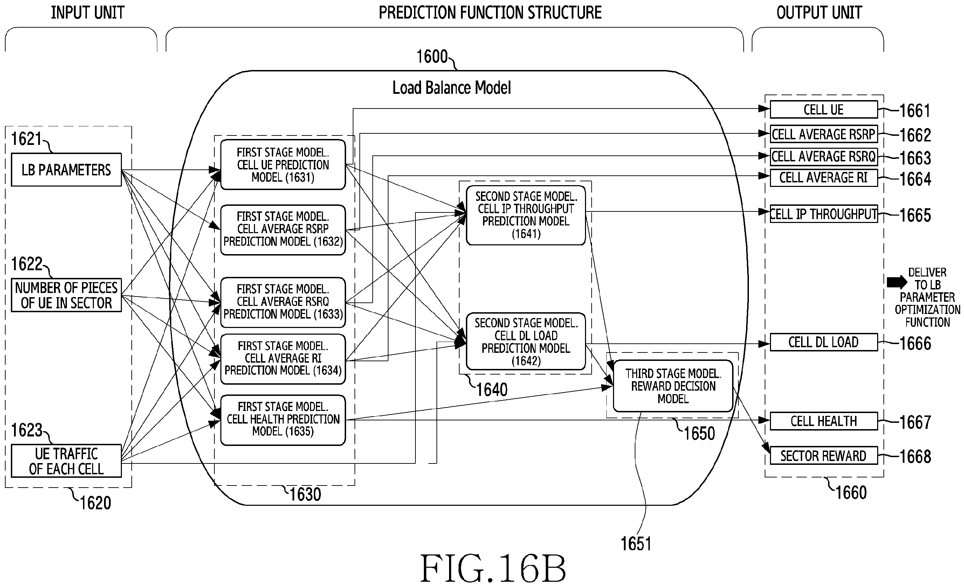

According to an embodiment, in operation 1505, the LB server 1305 may determine a second LB parameter based on a plurality of data which are outputted as a plurality of candidate LB parameters are inputted to the LB model. The second LB parameter may be a LB parameter applied to the base station 1301 for the second period. In an embodiment, the LB server 1305 may determine a first LB parameter policy to be applied to the base station 1301 for the second period, based on the determined second LB parameter. According to an embodiment, the second LB parameter determined in operation 1505 may correspond to an optimal LB parameter which will be described in FIGS. 16 to 23.

Operations 1503 and 1505 of the disclosure may be included in operation 1425 of FIG. 14. Accordingly, the embodiment of FIG. 15 may be coupled with the embodiment of FIG. 14.

Operation 1501 of FIG. 15 of the disclosure of acquiring the first CM information and the first PM information may correspond to operation 1603 of FIG. 16A of generating a sector scenario or may be performed before operation 1603. In addition, operation 1503 of FIG. 15 of the disclosure of training the LB model based on the first CM information and the first PM information may correspond to operations 1605 to 1607 of FIG. 16A, which will be described below. In addition, operation 1505 of FIG. 15 of the disclosure of determining the second LB parameter based on information that is outputted as the plurality of candidate LB parameters are inputted to the LB model may correspond to operations 1609 to 1611 of FIG. 16A. Accordingly, the embodiment of FIG. 15 may be coupled with the embodiment of FIG. 16A. In addition, the embodiment of FIG. 15 may be coupled with FIG. 14, and hence, the embodiments of FIGS. 14, 15, and 16A may be coupled with one another as long as they do not conflict with one another.

FIG. 16A is a flowchart to explain a process of generating a LB parameter policy according to an embodiment.

Referring to FIG. 16A, in operation 1601, the LB server 1305 according to an embodiment may select or determine an initial LB parameter policy. For example, the LB server 1305 may request initial PM information from the PM DB 1303, and may acquire or receive the initial PM information from the PM DB 1303. According to an embodiment, the LB server 1305 may select or determine an initial LB parameter policy based on the acquired or received initial PM information.

For example, the LB server 1305 may determine a direction of communication traffic distribution between a plurality of cells in a sector, based on the received initial PM information. For example, the LB server 1305 may determine a direction of communication traffic distribution to a second cell from a first cell when first communication traffic of the first cell is higher than second communication traffic of the second cell based on the received initial PM information.

According to an embodiment, the initial PM information acquired by the LB server 1305 may include throughput information on a throughput measured at a plurality of cells in the sector, and/or downlink load information on a downlink load measured at the plurality of cells in the sector. The LB server 1305 may determine the initial LB parameter policy based on the throughput information and/or the downlink load information.

For example, when there is an object to solve an IP throughput imbalance among the plurality of cells, the LB server 1305 may identify a first cell that has a lowest average IP throughput among the plurality of cells, based on the initial PM information. The LB server 1305 may identify a second cell that has a highest average IP throughput among the plurality of cells, based on the initial PM information. The LB server 1305 may determine a direction of communication traffic distribution (or a load balance direction) from the first cell that has a relatively low average IP throughput to the second cell that has a relatively high average IP throughput.

In another example, when there is an object to solve a downlink load imbalance among the plurality of cells, the LB server 1305 may identify a first cell that has a lowest downlink load among the plurality of cells, based on the initial PM information. The LB server 1305 may identify a second cell that has a highest downlink load among the plurality of cells, based on the initial PM information. The LB server 1305 may determine a direction of communication traffic distribution (or a load balance direction) from the second cell that has a relatively high downlink load to the first cell that has a relatively low downlink load.

According to an embodiment, when the direction of communication traffic distribution (or the load balance direction) is determined, the LB server 1305 may determine an initial LB parameter policy corresponding to the direction of communication traffic distribution. In the disclosure, the initial LB parameter policy may be referred to as a set of time slot-based LB parameters (for example, the first time slot to the 336^{th} time slot)) of an operating period (for example, the first period, the second period) of the base station. The initial LB parameter policy may be established based on the determined direction of communication traffic distribution.

According to an embodiment, in operation 1603, the LB server 1305 may generate a sector scenario. In an embodiment, the sector scenario may consist of an identification (ID) of a sector corresponding to the base station 1301, a time slot (for example, the first time slot to the 336^{th} time slot), sector environmental information of each time slot (for example, the estimated number of the UE in a sector, estimated traffic of UE), information on whether a LB parameter is applied, and/or a LB parameter application rate (LBBEST RATE).

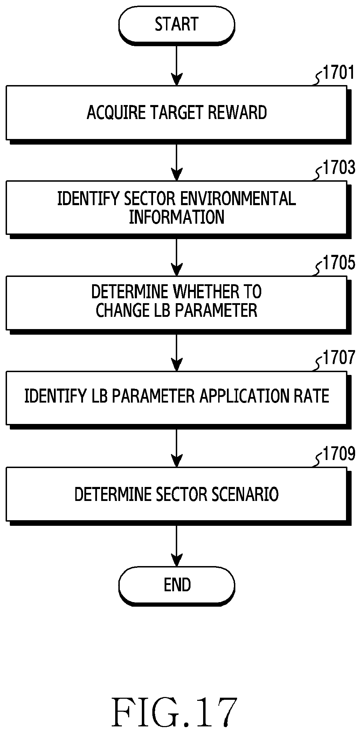

According to an embodiment, the LB server 1305 may perform an operation of acquiring or calculating a target reward in each time slot within a period to generate a sector scenario, an operation of determining or identifying sector environmental information, an operation of determining whether to apply a LB parameter in each time slot for an operating period of the base station 1301, based on a target reward in each time slot, and/or an operation of determining an application rate of a LB parameter (or an optimal LB parameter use rate). Operations for generating a sector scenario by the LB server 1305 will be described in detail with reference to FIG. 17, and accordingly, the embodiment of FIG. 17 may be coupled with the embodiment of FIG. 16A.

According to an embodiment, in operation 1605, the LB server 1305 may train a local model. The LB server 1305 may train local models by using PM information and CM information which are explained in table 6.

**[Table 6]**

| Source DB | Detailed Information Items | | |
|---|---|---|---|
| PM information | Performance-related measurement values of each cell | | |
| | | | a) # of UE in a sector (hereinafter, Sector UE): a sum of c) values of cells in a sector |
| | | | b) Traffic size or volume per UE of each cell (hereinafter, cell UE traffic) |
| | | | c) # of UE of each cell (hereinafter, cell UE) |
| | | | d) IP throughput of each cell (hereinafter, cell IPtput) |
| | | -Cell IPtput may be IP throughput measured on a RLC | |
| | | layer or PDCP layer. | |
| | | | e) Downlink load (e.g. physical resource blocks (PRBs) usage rate) of each cell (hereinafter, cell DLLoad) |
| | | | f) Avg. of RSRP measurement report of each cell (hereinafter, cell RSRP (Reference Signals Received Power)) |
| | | | g) Avg. of RSRQ measurement report of each cell (hereinafter, cell RSRQ(Reference Signal Received Quality) |
| | | | h) Avg. of Rank Index report of each cell (hereinafter, cell RI) |
| | | | i) VoLTEDropRate of each cell (hereinafter, cell VoLTEDropRate) |
| | | | j) CallDropRate of each cell (hereinafter, cell CDR) |
| | | | k) SessionSetupSuccessRate of each cell (hereinafter, cell SSSR) |
| | | | l) HoSuccessRate of each cell (hereinafter, cell HSR) |
| | | PDCPSduLossRate of each cell (hereinafter, cell PDCPLossR) | |
| CM information | Base station LB function setting parameters | | |
| | | | a) HO parameter: |
| | | - A1, A2, A3, A4 of threshold of each carrier | |
| | | - A5T1, AST2 threshold of each 'from carrier to carrier' combination | |
| | | - HO priority of each carrier | |
| | | | b) Forced handover setting parameter: |
| | | | -rate of UE to apply forced handover of each 'from carrier to carrier' combination |
| | | | c) Cell selection/reselection parameter: |
| | | - search rate of each carrier | |
| | - re/selection priority of each carrier | | |

According to an embodiment, the LB server 1305 may train the cell UE prediction model of FIG. 11 or FIG. 16B, which will be described below, to predict the number of the UE connected to each cell in the sector according to a LB parameter change, based on CM information and PM information.

For example, the LB server 1305 may use, as input data of the cell UE prediction model of FIG. 11, a) the number of the UE in the sector (Sector UE) and b) traffic of each cell (cell UE traffic) in the PM information of table 6, and a) a handover (HO) parameter, b) a forced handover setting parameter, and c) a cell selection/reselection parameter in the CM information. The LB server 1305 may use c) the number of the UE of each cell (cell UE) in the PM information of table 6 as output data of the cell UE prediction model of FIG. 11 or 16B. In an example, training data of the cell UE prediction model may include an initial LB parameter policy result and operation unit result data of the base station.

According to an embodiment, the LB server 1305 may train the cell average RSRP prediction model of FIG. 11 or FIG. 16B, which will be described below, to predict average RSRP, which is one of signal quality indexes received by UE connected to respective cells in the sector according to a LB parameter change, based on CM information and PM information.

For example, the LB server 1305 may use, as input data of the cell average RSRP prediction model of FIG. 11 or 16B, a) the number of the UE in the sector (Sector UE) and b) traffic of each cell (cell UE traffic) in the PM information of table 6, and a) a handover (HO) parameter, b) a forced handover setting parameter, and c) a cell selection/reselection parameter in the CM information. The LB server 1305 may use f) an average RSRP measurement value of each cell (cell RSRP) in the PM information of table 6 as output data of the cell average RSRP prediction model of FIG. 11 or 16B. In an example, training data of the cell average RSRP prediction model may include an initial LB parameter policy result and operation unit result data of the base station.

According to an embodiment, the LB server 1305 may train the cell average RSRQ of FIG. 11 or FIG. 16B to predict average RSRQ, which is one of signal quality indexes received by UE connected to respective cells in the sector according to a LB parameter change, based on CM information and PM information.

For example, the LB server 1305 may use, as input data of the cell average RSRQ prediction model of FIG. 11 or 16B, a) the number of the UE in the sector (Sector UE) and b) traffic of each cell (cell UE traffic) in the PM information of table 6, and a) a handover (HO) parameter, b) a forced handover setting parameter, and c) a cell selection/reselection parameter in the CM information. The LB server 1305 may use g) an average RSRQ measurement value of each cell (cell RSRQ) in the PM information of table 6 as output data of the cell average RSRQ prediction model of FIG. 11 or 16B. In an example, training data of the cell average RSRQ prediction model may include an initial LB parameter policy result and operation unit result data of the base station.

According to an embodiment, the LB server 1305 may train the cell average RI prediction model of FIG. 11 or FIG. 16B to predict an average RI, which is one of multi input multi output (MIMO) quality indexes of signals received by UE connected to respective cells in the sector according to a LB parameter change, based on CM information and PM information.

For example, the LB server 1305 may use, as input data of the cell average RI prediction model of FIG. 11 or 16B, a) the number of the UE in the sector (Sector UE) and b) traffic of each cell (cell UE traffic) in the PM information of table 6, and a) a handover (HO) parameter, b) a forced handover setting parameter, and c) a cell selection/reselection parameter in the CM information. The LB server 1305 may use h) an average RI measurement value of each cell (cell RI) in the PM information of table 6 as output data of the cell average RI prediction model of FIG. 11. In an example, training data of the cell average RI prediction model may include an initial LB parameter policy result and operation unit result data of the base station.

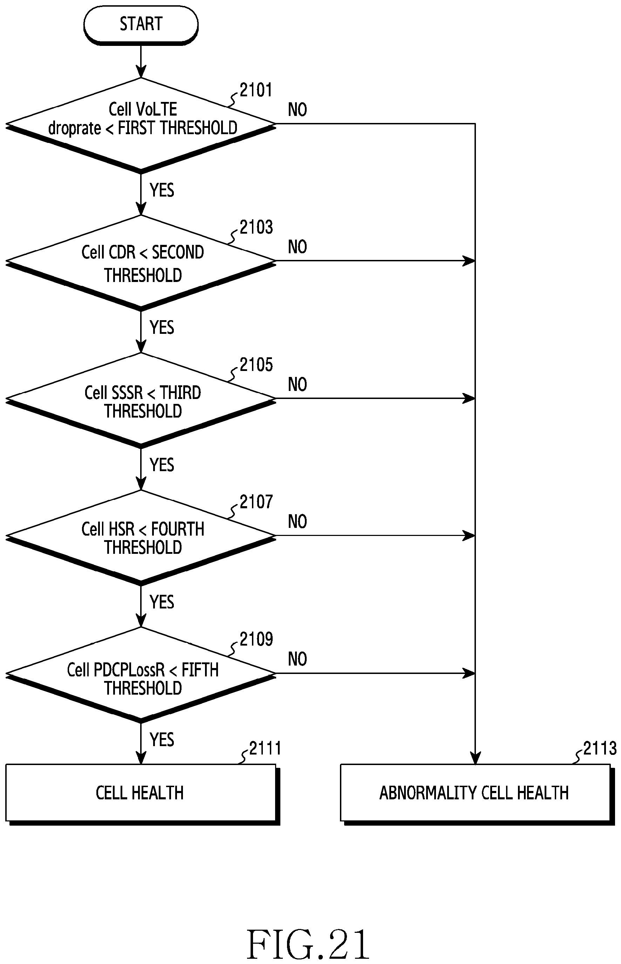

According to an embodiment, the LB server 1305 may train the cell health prediction model of FIG. 11 or FIG. 16B to predict normality of each cell in the sector according to a LB parameter change, based on CM information and PM information. Normality of a cell will be described in detail with reference to FIG. 21, and accordingly, the embodiment of FIG. 21 may be coupled with the embodiment of FIG. 16A.

For example, the LB server 1305 may use, as input data of the cell health prediction model of FIG. 11, a) the number of the UE in the sector (Sector UE) and b) traffic of each cell (cell UE traffic) in the PM information of table 6, and a) a handover (HO) parameter, b) a forced handover setting parameter, and c) a cell selection/reselection parameter in the CM information. The LB server 1305 may use information on whether a cell is healthy (for example, cell health (HEALTHY) or cell abnormality (NOT_HEALTHY) as output data of the cell health prediction model of FIG. 11 or 16B. In an example, training data of the cell health prediction model may include an initial LB parameter policy result and operation unit result data of the base station.

According to an embodiment, the LB server 1305 may train the cell IP throughput prediction model of FIG. 11 or 16B to predict an IP throughput of performance of cells in the sector according to a traffic load applied to respective cells and quality of a signal, based on CM information and PM information.

For example, the LB server 1305 may use, as input data of the cell IP throughput prediction model of FIG. 11 or 16B, b) traffic of each cell (cell UE traffic), c) the number of the UE of each cell (cell UE), f) a cell average RSRP measurement value (cell RSRP), g) a cell average RSRQ measurement value (cell RSRQ), and h) an average RI of each cell (cell RI) in the PM information of table 6. The LB server 1305 may use d) an IP throughput of each cell (cell IPtput) in the PM information as output data of the cell IP throughput prediction model of FIG. 11 or 16B. In an example, training data of the cell IP throughput prediction model may include cell IPtput (or IP throughput) synthesis data and operation unit result data of the base station.

According to an embodiment, the LB server 1305 may train the cell DL load prediction model of FIG. 11 or 16b to predict a downlink load of the performance of each cell according to a traffic load applied to respective cells and signal quality, based on CM information and PM information.

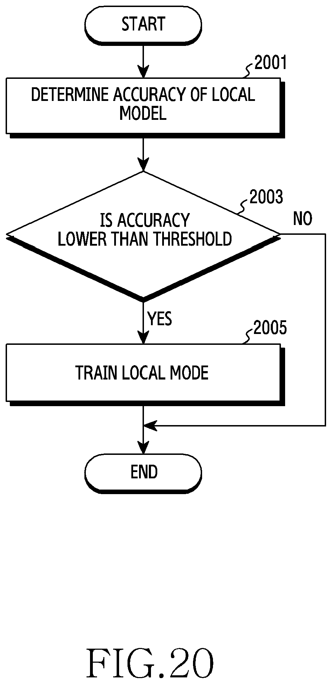

For example, the LB server 1305 may use, as input data of the cell IP throughput prediction model of FIG. 11 or 16B, b) traffic of each cell (cell UE traffic), c) the number of the UE of each cell (cell UE), f) a cell average RSRP measurement value (cell RSRP), g) a cell average RSRQ measurement value (cell RSRQ), and h) an average RI of each cell (cell RI) in the PM information of table 6. The LB server 1305 may use e) a downlink load of each cell (cell DLLoad) in the PM information as output data of the cell DL load prediction model of FIG. 11 or 16B. In an example, training data of the cell DL load prediction model may include cell DLLoad synthesis data and operation unit result data of the base station. Detailed operations of operation 1605 of training local models will be described in detail below with reference to FIG. 20, and accordingly, the embodiment of FIG. 20 may be coupled with the embodiment of FIG. 16A.

According to an embodiment, in operation 1607, the LB server 1503 may generate a LB model based on the trained local models. For example, referring to FIG. 11 or 16B, each of the cell UE prediction model, the cell average RSRP prediction model, the cell average RSRS prediction model, and/or the cell average RI prediction model, which are first stage (or step) local models, may be connected with at least one of the cell IP throughput prediction model, the UE cell IP throughput prediction model, or the cell DL load prediction model, which are second stage local models. In addition, the cell IP throughput prediction model, the UE cell IP throughput prediction model, or the cell DL load prediction model, which are the second stage local models, may be connected with the reward decision model which is a third stage local model. In the disclosure, the first local model and the second local model being connected may mean that output information or an output value of the first local model is substantially used as input information or an input value of the second local model.

FIG. 11 illustrates that the 9 local models generate a LB model, but this is merely an example. Various numbers or various types of local models may generate a LB model. For example, the LB model of FIG. 16B, which will be described below, may omit the UE cell IP throughput prediction model and may be generated by 8 local models in total unlike the LB model of FIG. 11.

According to an embodiment, the LB model may predict PM information that cells in the sector will have when a LB parameter of the base station 1301 is changed in a designated time slot (or a designated period) (for example, the first period, the second period).

According to an embodiment, the LB model may be generated in each time slot of an operating period (for example, the first period, the second period) of the base station. For example, one LB model may be generated in every time slot in which information on whether a LB parameter is applied (for example, LB APPLY) in the sector scenario generated in operation 1603 is "YES". For example, when it is determined that a LB parameter is applied in a first time slot among time slots (for example, the first time slot to the 336^{th} time slot) of an operating period (for example, the first period) of the base station ("YES"), a first LB model of the first time slot may be generated. For example, when it is determined that a LB parameter is applied in a time slot (for example, a second time slot) of an operating period (for example, the first period) of the base station ("YES"), a second LB model of the second time slot may be generated. For example, when it is determined that a LB parameter is not applied in a time slot (for example, a third time slot) of an operating period (for example, the first period) of the base station ("NO"), a LB model corresponding to the third time slot may not be generated.

According to an embodiment, a sector reward which is one of the output information of the LB model may be determined based on a prediction value (or an output value) of the cell IP throughput prediction model, a prediction value (or an output value) of the UE cell IP throughput prediction model, a prediction value (or an output value) of the cell DL load prediction model, and/or a prediction value (or an output value) of the cell health prediction model.

According to an embodiment, the LB server 1305 may determine a reserve reward by using at least one of a first output value predicted by the UE cell IP throughput prediction model or a second output value predicted by the cell DL load prediction model. A sector reward which is a final reward may be determined by using the determined reserve reward and a prediction value (or an output value) of the cell health prediction model.

For example, a method for determining a sector reward which is a final reward will be described hereinafter.

According to an embodiment, the LB server 1305 may determine a reserve reward in substantially the same method as the method of determining a target reward. For example, the LB server 1305 may determine a standard deviation of IP throughputs of a plurality of cells belonging to a sector (STDEV of cell IP throughput) as a reserve reward. In another example, the LB server 1305 may determine a maximum value of downlink loads of the plurality of cells belonging to the sector as a reserve reward. In still another example, the LB server 1305 may determine a standard deviation of downlink loads of the plurality of cells belonging to the sector (STDEV of cell DLLoad) as a reserve reward.

According to an embodiment, the LB server 1305 may determine a sector reward (or final reward) based on a cell health result and the determined reserve reward. For example, when it is determined that a cell is healthy, the LB server 1305 may determine the determined reserve reward as a sector reward (or a final reward). For example, when it is determined that a cell is not healthy (UNHEALTHY or NOT_HEALTHY), the LB server 1305 may multiply the determined reward by a predetermined negative value (for example, -1).

Table 7 shows a method of determining a sector reward (or a final reward by using a reserve reward (for example, Reward (Cell IP tput, Cell DLLoad)) and cell health (CELL HEALTHY).

**[Table 7]**

| |
|---|
| ```
If CELL_HEALTH = HEALTHY
         LB Model Reward = Reward(Cell IP tput, Cell DLLoad)
 else # CELL_HEALTH= NOT HEALTHY
    LB Model Reward = -1
``` |

According to an embodiment, the LB server 1305 may connect the local models of FIG. 11 and then may input the estimated number of the UE and the estimated UE traffic in the sector scenario generated in operation 1603 to the LB model as input data, thereby generating a LB model in a specific time slot (for example, the first time slot of the first period).

According to an embodiment, in operation 1609, the LB server 1305 may optimize a LB parameter. In an embodiment, optimizing the LB parameter may be referred to as operations of substantially inputting a plurality of candidate parameters to the LB model, and determining a candidate parameter corresponding to a final sector reward value among a plurality of rewards outputted from the LB model.

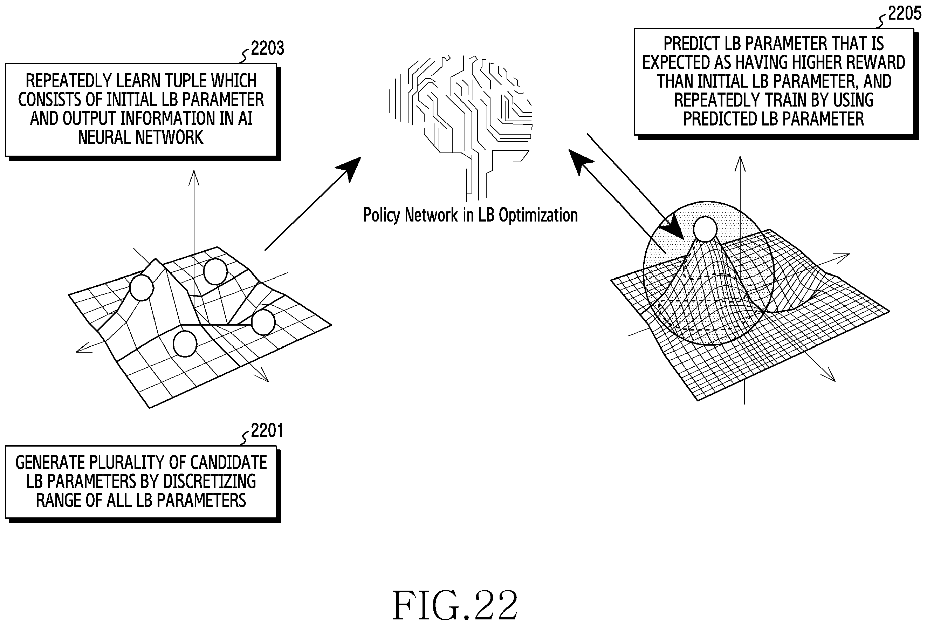

In another example, optimizing the LB parameter may be referred to as operations of discovering a LB parameter having a maximum sector reward value and storing an optimization learning record which is a discovering process. The optimal parameter may be referred to as a parameter that substantially has a maximum sector reward value in an optimization learning record. The optimization learning record may be referred to as recording, by a policy model (or a policy neural network) for determining an optimal parameter, at least one LB parameter which is used in training the policy neural network, and a sector reward corresponding to the at least one LB parameter in a sequence of learning. The optimization learning record will be described in detail with reference to FIG. 22, and accordingly, the embodiment of FIG. 22 may be coupled with the embodiment of FIG. 16A.

According to an embodiment, the LB server 1305 may include a policy model, and the policy model may include a LB parameter optimization function. In another example, the policy model may include a LB parameter optimization module as a software module. In an embodiment, the policy model may determine an optimal parameter as a LB parameter to be applied to the base station 1301 for a next period. For example, the policy model may determine a LB model to be applied to the base station 1301 for the first period or the second period which is the next period of the first period.

According to an embodiment, the operation of training the policy model of the LB server 1305 or optimizing the LB parameter may include an operation of determining an initial LB parameter, an operation of learning by using the initial LB parameter, and an operation of defining an optimal LB parameter and an optimization learning record.

According to an embodiment, in the operation of determining the initial LB parameter, the policy model may generate a plurality of candidate LB parameters by discretizing a range of all LB parameters. In addition, the policy model may repeatedly train an artificial intelligence neural network of the policy model with a tuple, which consists of a determined initial LB parameter and output information outputted when the initial parameter is inputted to the LB model, a predetermined number of times. In addition, the policy model may predict or estimate a LB parameter that is expected as having a higher sector reward than the initial LB parameter, based on the initial LB parameter. The operation of training the policy model of the LB server 1305 or optimizing the LB parameter will be described in detail below with reference to FIG. 22.

According to an embodiment, in operation 1611, the LB server 1305 may generate a first LB parameter policy. In an embodiment, the LB parameter policy may be referred to as data, a lookup table (LUT), or a record in which LB parameters of a sector managed by the base station 1301 are designated by time slots (for example, the first time slot to the 336^{th} time slot) of an operating period (for example, the first period, the second period) of the base station. For example, the LB parameter policy may include a unique identifier (for example, a sector ID) of a sector managed by the base station 1301, a period for which an optimal LB parameter determined in operation 1609 is applied (or a date corresponding to a next operating period of the base station), a time slot in which a LB parameter is applied in the period for which an optimal LB parameter is applied, and/or a LB parameter to be applied to the base station 1301. The time slot in which the LB parameter is applied fin the period for which the optimal LB parameter is applied may be referred to as a time slot in which the information on whether the LB parameter is substantially applied is "YES".

According to an embodiment, the LB model may be generated in every combination of a sector and time slots in a period. For example, a first LB model may be generated in a first time slot of a first period in a first sector. A second LB model may be generated in a second time slot of the first period in the first sector. In an example, a third LB model may be generated in a first time slot of a first period in a second sector which is distinguished from the first sector.

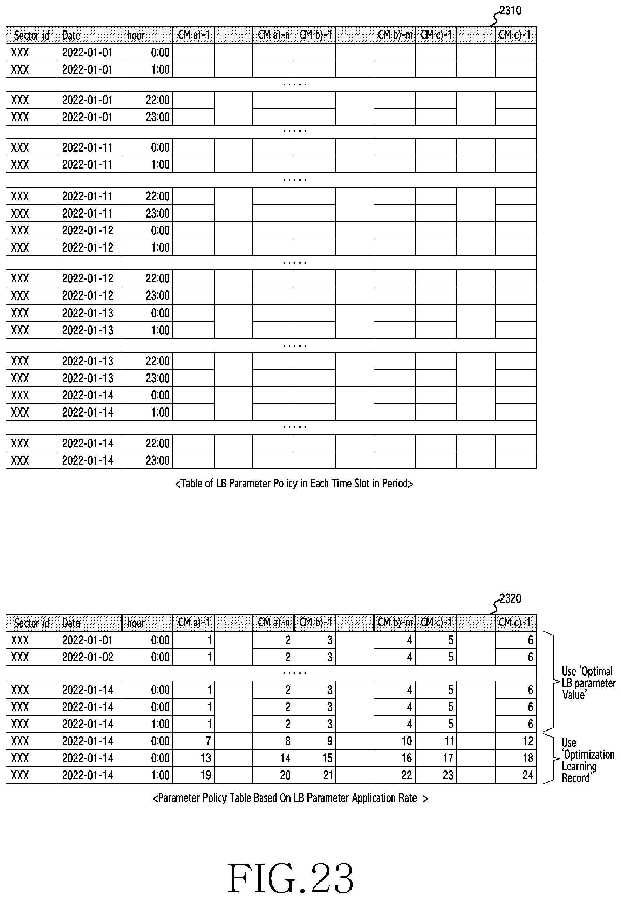

According to an embodiment, an optimal LB parameter and an optimization learning record may be generated in every combination of a sector and time slots in a period like the LB model. For example, the optimal LB parameter and the optimization learning record may be stored in chronological order. For example, a first LB parameter and a first optimization learning record may be stored in response to a time slot of a first period in a first sector. A 1-2 LB parameter and a second optimization learning record may be stored in response to a second time slot of the first period in the first sector. In an example, a 1-3 LB parameter and a third optimization learning record may be stored in response to a first time slot of a first period in a second sector which is distinguished from the first sector. A process of establishing a LB parameter policy will be described in detail below with reference to FIG. 23.

According to an embodiment, the base station 1301 may perform communication with at least one UE in the sector based on the determined LB policy.

FIG. 16A illustrates that the LB parameter policy is generated through operations 1601 to 1611, but this is merely an example. In generating the LB parameter policy, the order of operations 1601 to 1611 may be changed or at least one operation of operations 1601 to 1611 may be omitted. In addition, in generating the LB parameter policy, operations other than operations 1601 to 1611 may be added.

FIG. 16A illustrates that operations 1601 to 1611 are performed by the LB server 1305, but this is merely an example. For example, operations 1601 to 1611 may be performed by at least one process in the LB server 1305 or at least one processor which executes instructions stored in a non-transitory storage medium.

FIG. 16B is a view to explain a load balance model and local models included in the load balance model according to an embodiment.

Referring to FIG. 16B, the load balance model 1600 according to an embodiment may include a first stage model 1630, a second stage model 1640, and/or a third stage model 1650. For example, the first stage model 1630 may include a cell user equipment (UE) prediction model 1631, a cell average reference signal received power (RSRP) prediction model 1632, a cell average reference signal received quality (RSRQ) prediction model 1633, a cell average rank index (RI) prediction model 1634, and a cell health prediction model (1635). For example, the second stage model 1640 may include a cell IP throughput prediction model 1641 and a cell DL load prediction model 1642. For example, the third stage model 1650 may include a reward decision model 1651.

According to an embodiment, as CM information 1621 (for example, LB parameters) is inputted to the first stage model 1630, first output information may be outputted from the first stage model 1630. For example, LB parameters 1621 corresponding to the CM information, and the number of the UE in the sector 1622 and UE traffic of each cell 1623 in the PM information may be inputted to the first stage model 1630, and the first stage model 1630 may output the first output information.

According to an embodiment, as the first output information is inputted to the second stage model 1640, second output information may be outputted from the second stage model 1640. For example, the first output information may include output data outputted from the cell UE prediction model 1631, the cell average RSRP prediction model 1632, the cell average RSRQ prediction model 1633, and the cell average RI prediction model 1634 of the first stage model 1630. In an example, as the first output information is inputted to the second stage model 1640, the second stage model 1640 may output the second output information. The second output information may include output data outputted from the cell IP throughput prediction model 1641 and the cell DL load prediction model 1642 of the second stage model 1640. In an embodiment, as the second output information is inputted to the third stage model 1650 (for example, the reward decision model 1650), at least part (for example, a sector reward) of the PM information may be outputted from the third stage model 1650.

As a result, as the LB parameters 1621, the number of the UE in the sector 1622, and the UE traffic of each cell 1620 are inputted to the load balance model 1600, the number of the UE of each of a plurality of cells 1661, cell average RSRP 1622, cell average RSRQ 1663, a cell average RI 1664, a cell IP throughput 1665, a cell DL load 1666, cell health 1667, and/or a sector reward 1668 may be outputted.

FIG. 17 is a view to explain the operation of generating a sector scenario of FIG. 16A according to an embodiment.

Referring to FIG. 17, in operation 1701, the LB server 1305 according to an embodiment may acquire or calculate a target reward of each time slot in a period to generate a sector scenario. For example, the LB server 1305 may acquire a target reward of each time slot in a period, based on an operating period of the base station 1301. For example, the LB server 1305 may acquire a target reward of each time slot in the first period, based on initial PM information. For example, the LB server 1305 may acquire a target reward of each time slot in the second period, based on first PM information of the first period. In an example, the second period may be referred to as an operating period of the base station 1301 after the first period.

According to an embodiment, the target reward of each time slot may be referred to as an evaluation index based on which a user intends to enhance or improve by changing a LB parameter. For example, a target reward may be calculated through a KPI included in PM information. For example, the LB server 1305 may determine a minimum value (Min cell IP throughput) among IP throughputs of a plurality of cells belonging to the sector in the acquired PM information as a target reward. In an example, when the minimum value (Min cell IP throughput) among the IP throughputs of the plurality of cells is determined as a target reward, the LB server 1305 may aim at increasing the minimum value (Min cell IP throughput) among the IP throughputs of the plurality of cells.

For example, the LB server 1305 may determine a standard deviation of IP throughputs of the plurality of cells belonging to the sector (STDEV of cell IP throughput) as a target reward. For example, the LB server 1305 may determine a maximum value (Max cell DLLoad) among downlink loads of the plurality of cells belonging to the sector as a target reward. For example, the LB server 1305 may determine a standard deviation of downlink roads of the plurality of cells belonging to the sector (STDEV of cell DLLoad) as a target reward. In an embodiment, when the LB server 1305 determines the standard deviation of IP throughputs (STDEV of cell IP throughput), the maximum value (Max cell DLLoad) of downlink loads, and the standard deviation of downlink loads (STDEV of cell DLLoad) as a target load, the LB server 1305 may aim at reducing the standard deviation of IP throughputs (STDEV of cell IP throughput), the maximum value (Max cell DLLoad) of downlink loads, and the standard deviation of downlink loads (STDEV of cell DLLoad).

According to an embodiment, in operation 1703, the LB server 1305 may identify (or determine) sector environmental information. In an embodiment, the sector environmental information may include the number of the UE in a sector in each time slot and/or average traffic of UE of a plurality of cells in a sector in each time slot in PM information. For example, when PM information is acquired from the PM DB 1303, the LB server 1305 may identify the number of the UE in a sector in each time slot and/or average traffic of UE of a plurality of cells in a sector in each time slot from the acquired PM information.

According to an embodiment, in operation 1705, the LB server 1305 may determine whether to apply a LB parameter in each time slot for an operating period of the base station 1301, based on a target reward of each time slot. For example, the LB server 1305 may compare the acquired target reward of each time slot and a threshold. For example, when the target reward of the first time slot acquired is greater than a threshold (Th_LB) of the first time slot, the LB server 1305 may not apply a determined LB parameter in the first time slot (LB APPLY NO). When the target reward of the first time slot acquired is smaller than the threshold of the first time slot, the LB server 1305 may apply the determined LB parameter in the first time slot (LB_APPLY_YES). In an example, the determined LB parameter may refer to the second LB parameter of the first LB parameter policy which is determined in operation 1611.

According to an embodiment, the operation of determining, by the LB server 1305, whether to apply a LB parameter of each time slot for an operating period based on a target reward of each time slot may include an operation of comparison one of a minimum value, a maximum value, or a standard deviation of the plurality of PM values, and a target PM value, and an operation of determining whether to transmit the second load balance parameter to the base station or an external server controlling setting of the base station, based on a result of comparison.

According to an embodiment, in operation 1707, the LB server 1305 may identify (or determine) an application rate of the LB parameter (or an optimal LB parameter use rate). For example, the LB server 1305 may determine an application rate of the LB parameter, based on a target reward of each time slot and/or the number of the UE in the sector in each time slot in the sector environmental information. In an embodiment, the application rate of the LB parameter may be referred to as a rate of a LB parameter which is used for an operating period (for example, the first period or the second period) of the base station 1301. In another example, the application rate of the LB parameter may be referred to as a rate of an optimization LB parameter which is used for an operating period (for example, the first period or the second period) of the base station 1301, and an optimization learning record.

For example, the LB server 1305 may reduce the application rate of the LB parameter as the target reward of each time slot acquired in operation 1701 increases. In another example, the LB server 1305 may reduce the application rate of the LB parameter as the number of the UE in the sector acquired in operation 1603 increases. However, the application rate of the LB parameter may be controlled by a reward threshold (TH_Reward) or a sector UE threshold (TH_SectorUE) as explained in table 8 presented below, such that excessive reduction may be prevented when the application rate of the LB parameter is reduced according to the target reward of each time slot or the number of the UE in the sector.

Table 8 explains an equation for calculating an application rate of a LB parameter.

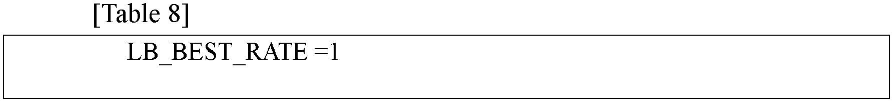

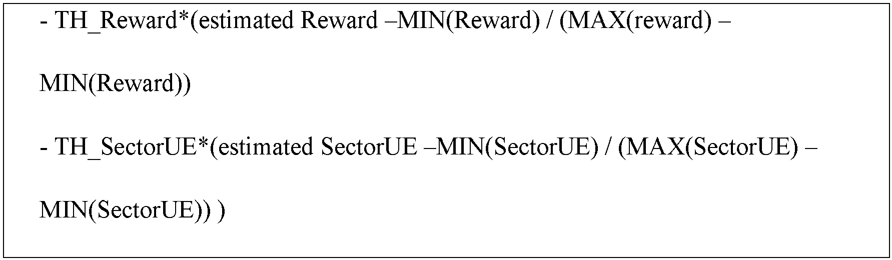

According to an embodiment, in operation 1709, the LB server 1305 may determine a sector scenario based on an identification (ID) of the sector corresponding to the base station 1301, a time slot (for example, the first time slot to the 336^{th} time slot), sector environmental information of each time slot (for example, the estimated number of the UE in the sector, estimated UE traffic), information on whether a LB parameter is applied, and a LB parameter application rate (LB_BEST_RATE). For example, the sector scenario may correspond to a set of information in operation unit time slots of the base station, and, when the operating unit time of the base station is 1 hour, the sector scenario may have a maximum length of 24 time slots from 0 o'clock to 23 o'clock.

FIG. 17 illustrates that a sector scenario is determined through operations 1701 to 1709, but this is merely an example. In determining the sector scenario, the order of operations 1701 to 1709 may be changed or at least one operation of operations 1701 to 1709 may be omitted. In addition, in determining the sector scenario, operations other than operations 1701 to 1709 may be added.

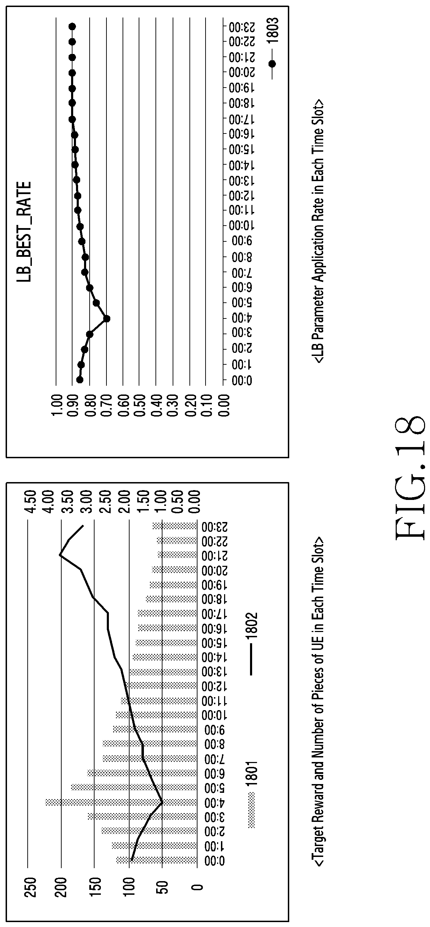

FIG. 18 is a view to explain the operation of identifying a LB parameter application rate of FIG. 17 according to an embodiment.

Referring to FIG. 18, the LB server 1305 according to an embodiment may determine an application rate of a LB parameter, based on a target reward of each time slot and/or the number of the UE in the sector in each time slot in sector environmental information. For example, the LB server 1305 may reduce the LB parameter application rate as the target reward of each time slot acquired increases. In another example, the LB server 1305 may reduce the LB parameter application rate as the number of the UE in the sector acquired in operation 1603 increases.

According to an embodiment, a first graph 1801 may be referred to as a graph illustrating values of a target reward in time slots. In an embodiment, the target reward in each time slot may be acquired in operation 1701 of FIG. 17 of acquiring (or calculating) a target reward by the LB server 1505.

According to an embodiment, a second graph 1802 may be referred to as a graph illustrating the number of the UE in the sector in each time slot.

According to an embodiment, a third graph 1803 may be referred to as a graph illustrating an application rate of a LB parameter (or an optimal LB parameter) in the sector in each time slot.

Referring to the first graph 1801 and the second graph 1802 according to an embodiment, in a first time slot (for example, 04:00), the first graph 1801 shows a maximum value and the second graph 1802 shows a minimum value. Accordingly, it is identified that the target reward value is highest and the number of the UE in the sector is lowest in the first time slot (for example, 04:00). In an embodiment, in the first time slot (for example, 04:00), the third graph 1830 shows a minimum value of about 0.7, and it is identified that the LB parameter application rate is lowest in the first time slot (for example, 04:00).

Accordingly, it is identified through the first graph 1801, the second graph 1802, and the third graph 1803 that as a target reward value is higher or the number of the UE in the sector is lower, the LB server 1305 reduces the LB parameter application rate.

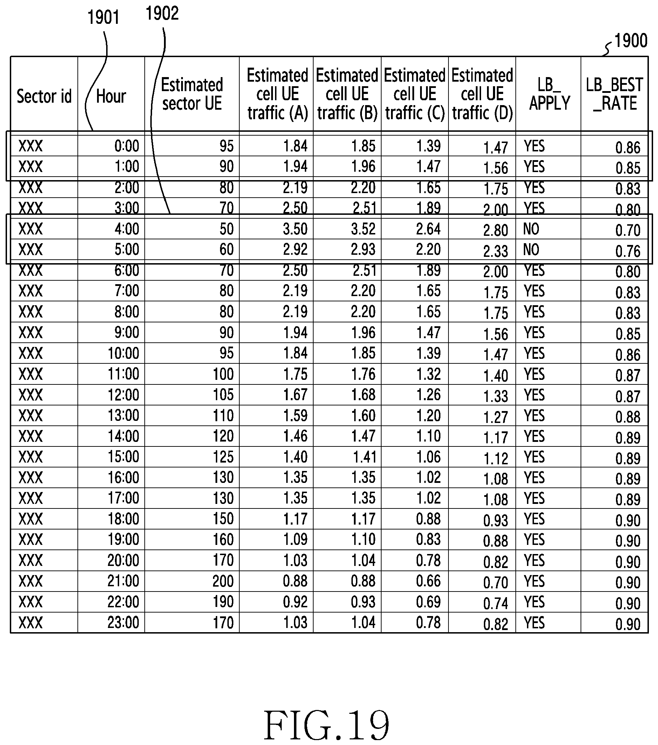

FIG. 19 is a view to explain an example of a sector scenario generated according to an embodiment.

A sector scenario 1900 according to an embodiment may be stored in the form of a lookup table (LUT). However, the form (for example, a lookup table) of the sector scenario 1900 of FIG. 19 is merely an example and the sector scenario may be stored in various forms.

According to an embodiment, the sector scenario 1900 may correspond to a sector scenario generated or determined by operation 1603 of FIG. 16A and/or operation 1709 of FIG. 17. The sector scenario 1900 may be a sector scenario which is generated based on the first graph 1801, the second graph 1802 and the third graph 1803 shown in FIG. 18.

According to an embodiment, the sector scenario 1900 may include the estimated number of the UE in the sector, estimated traffic of each of an estimated plurality of cells (for example, cell A, cell B, cell C, and cell D), information on whether a LB parameter is applied (LB_APPLY) and/or a LB parameter application rate (LB_BEST_RATE). For example, referring to a first part 1901 of the sector scenario 1900, a first time slot (for example, 0:00) may include an estimated number of 95 UEs in the sector, estimated traffic of each of the plurality of cells (for example, 1.84, 1.85, 1.39, and 1.47), information on whether a LB parameter is applied ("YES"), and/or a LB parameter application rate (for example, 0.86). A second time slot (for example, 1:00) may include an estimated number of 90 UEs in the sector, estimated traffic of each of the plurality of cells (for example, 1.94, 1.96, 1.47 and 1.56), information on whether a LB parameter is applied ("YES"), and/or a LB parameter application rate (for example, 0.85).

In another example, referring to a first part 1902 of the sector scenario 1900, a fifth time slot (for example, 4:00) may include an estimated number of 70 UEs in the sector, estimated traffic of each of the plurality of cells (for example, 3.50, 3.52, 2.64, and 2.80), information on whether a LB parameter is applied ("NO"), and/or a LB parameter application rate (for example, 0.70). A sixth time slot (for example, 5:00) may include an estimated number of 60 UEs in the sector, estimated traffic of each of the plurality of cells (for example, 2.92, 2.93, 2.20 and 2.33), information on whether a LB parameter is applied ("NO"), and/or a LB parameter application rate (for example, 0.76).

According to an embodiment, the LB server 1305 may determine parameters in each time slot within an operating time (for example, the first period, the second period) of the base station 1301, based on information whether a LB parameter is applied (LB_APPLY) and a LB parameter application rate (LB_BEST_RATE).

For example, when it is assumed that the operating period of the base station is 14 days, LB parameters (or optimal LB parameters) at 0:00 should be 14 parameters. In an example, the LB parameter 1305 may apply an optimal LB parameter to the base station for 12 days out of 14 days based on the information at 0:00 indicating that information on whether a LB parameter is applied is "YES" and the LB parameter application rate (LB_BEST_RATE) is 0.86. In an example, the LB server 1305 may apply LB parameters (for example, two LB parameters) acquired from the last learning record of the optimization learning record to the base station for the remaining two days. In an example, the optimal parameter may correspond to an LB parameter that is determined in operation 1609 of FIG. 16A. In an example, the period of 12 days may be a product of the period (for example, 14) and the LB parameter application rate (LB BEST _RATE). For example, the period of 12 days may be obtained by 14x0.86=12.04.

In another example, when it is assumed that the operating period of the base station is 14 days, LB parameters (or optimal LB parameters) at 4:00 should be 14 parameters. In an example, the LB parameter 1305 may apply an optimal LB parameter to the base station for 0 day out of 14 days based on the information at 4:00 indicating that information on whether a LB parameter is applied is "NO" and the LB parameter application rate (LB BEST RATE) is 0.70. In an example, the LB server 1305 may apply LB parameters (for example, 14 LB parameters) acquired from the last learning record of the optimization learning record to the base station for 14 days.

FIG. 20 is a view to explain the operation of training local models of FIG. 16A according to an embodiment.

Referring to FIG. 20, in operation 2001, the LB server 1305 according to an embodiment may determine accuracy of a local model. For example, the LB server 1305 may input first input data (for example, CM information and PM information) of a current period (for example, the second period) to a local model, and may identify first output data outputted from the local model. In an example, the LB server 1305 may identify real data of a previous period (for example, the first period). In an example, the LB server 1305 may determine accuracy of the local model by comparing the first input data and the first output data with real data.

According to an embodiment, in operation 2003, the LB server 1305 may determine whether the accuracy of the local model is lower than a threshold (Th local model_performance). In an example, when the accuracy of the local model is higher than the threshold, the LB server 1305 may not additionally train the local model.

According to an embodiment, when the accuracy of the local model is lower than the threshold, the LB server 1305 may determine that the local model requires continuous training, and may train the local model in operation 2005. In an embodiment, the local model performing continuous training may perform continuous training by using training data corresponding to the local model.

According to an embodiment, the threshold (or reference value) for determining the accuracy of the local model may have different values according to local models, and may be pre-designated by a user. For example, a user may set the threshold value to an absolutely high value, and accordingly, the LB server 1305 may perform continuous training for the local model. In another example, a user may set the threshold to an absolutely low value, and accordingly, the LB server 1305 may prevent continuous training for the local model. Accordingly, a user may adjust calculation resources used for continuous training by adjusting the threshold for determining accuracy.

According to an embodiment, operations 2001 to 2005 may be repeatedly performed for each local model.

According to an embodiment, a local model requiring continuous training may be stored in the local model repository 1318.

FIG. 21 is a view to explain an operation of determining cell health of the cell health prediction model according to an embodiment.

Referring to FIG. 21, in operation 2101, the LB server 1305 according to an embodiment may compare a Cell VoLTE drop rate of each of a plurality of cells in a sector with a first threshold. In an embodiment, the LB server 1305 may identify that there is an abnormality in cell health in action 2113 when the Cell VoLTE drop rate is higher than the first threshold.

According to an embodiment, when the Cell VoLTE drop rate is lower than the first threshold, the LB server 1305 may compare a call drop rate (CDR) of each of the plurality of cells in the sector with a second threshold in operation 2103. In an embodiment, the LB server 1305 may identify that there is an abnormality in cell health in operation 2113 when the CDR is higher than the second threshold.

According to an embodiment, when the CDR is lower than the second threshold, the LB server 1305 may compare a session setup success rate (SSSR) of each of the plurality of cells in the sector with a third threshold in operation 2105. In an embodiment, when the SSSR is higher than the third threshold, the LB server 1305 may identify that there is an abnormality in cell health in operation 2113.

According to an embodiment, when the SSSR is lower than the third threshold, the LB server 1305 may compare a ho success rate (HSR) of each of the plurality of cells in the sector with a fourth threshold in operation 2107. In an embodiment, the LB server 1305 may identify that there is an abnormality in cell health in operation 2113 when the HSR is higher than the fourth threshold.

According to an embodiment, when the HSR is lower than the third threshold, the LB server 1305 may compare a PDCPLossR (PDCPSdulossrate) of each of the plurality of cells in the sector with a fifth threshold in operation 2109. The PDCPLossR may be referred to as a case in which packet transmission is not possible. In an embodiment, the LB server 1305 may identify that there is an abnormality in cell health in operation 2113 when the PDCPLossR is higher than the fifth threshold.

According to an embodiment, when the PDCPLossR is lower than the fifth threshold, the LB server 1305 may identify that the cell is healthy in operation 2111.

FIG. 21 illustrates that operations 2101, 2103, 2105, 2107, and 2109 are performed in sequence, but the order of actions 2101 to 2109 is merely an example. Accordingly, the order of actions 2101 to 2109 may be changed. For example, the LB server 1305 may perform operation 2101 after performing operation 2103.

FIG. 2 illustrates the operation of predicting cell health through operations 2101 to 2113, but this is merely an example. The operation of predicting cell health by the cell health prediction model may be referred to as an operation of outputting at least one PM value indicating communication performance of the sector as the first CM information is inputted, and determining a communication state of cells in the sector by comparing at least one digitized PM value with a threshold.

FIG. 22 is a concept view to explain a LB parameter optimizing process according to an embodiment.

Referring to FIG. 22, in operation 2201, a policy model according to an embodiment may generate a plurality of candidate LB parameters by discretizing a range of all LB parameters (initial sparse exploration by grid search). The policy model may acquire output information by inputting the plurality of candidate LB parameters to a LB model. For example, the output information may include a sector reward, and may include the number of pieces of UE of each cell, cell average RSRP, cell average RSRQ, a cell average RI, a cell IP throughput, a downlink load of each cell and/or a cell health result as described above with reference to FIGS. 11 to 16B. In an embodiment, the policy model may identify a plurality of output rewards that are outputted as the plurality of candidate LB parameters are inputted to the LB model. The plurality of output rewards may correspond to the plurality of candidate LB parameters, respectively. In an embodiment, the policy model may identify an output reward that has a highest value among the plurality of output rewards, and may identify a candidate LB parameter corresponding to the output reward having the highest value. As a result, the policy model may determine the candidate LB parameter corresponding to the output reward having the highest value as an initial parameter.

According to an embodiment, in operation 2203 as an operation of learning by using an initial LB parameter, the policy model may repeatedly learn a tuple which consists of the determined initial LB parameter and output information outputted as the initial parameter is inputted to the LB model a number of times pre-set in an AI neural network of the policy model (imitation learning).

According to an embodiment, in operation 2205 as an operation of determining an optimal LB parameter and an optimization learning record, the trained policy model may predict or estimate a LB parameter that is expected as having a higher sector reward than the initial LB parameter, based on the initial LB parameter. The trained policy model may input the predicted or estimated LB parameter to the LB model. In operation 2205, the trained policy model may repeatedly learn a predetermined number of times, based on the predicted or estimated LB parameter and output information of the LB model (for example, information outputted from the LB model as the estimated LB parameter value is inputted) (precise exploration via reinforcement learning). In an embodiment, the trained policy model may discover a LB parameter that is expected as having a higher sector reward than the initial LB parameter or the predicted LB parameter. As a result, the trained policy model may determine the LB parameter that is expected as having a higher sector reward than the initial LB parameter or the predicted LB parameter as an optimal LB parameter (or final LB parameter). In addition, the trained policy model may store the optimized learning record. In this case, when there is no LB parameter that is expected as having a higher reward than the initial LB parameter, the trained policy model may determine the initial LB parameter as an optimal LB parameter. When there is no LB parameter that is expected as having a higher reward than the predicted or estimated LB parameter, the trained policy model may determine the predicted or estimated LB parameter as an optimal LB parameter.

FIG. 23 is a view to explain a parameter policy based on a LB parameter application rate according to an embodiment.

Referring to FIG. 23, a first table 2310 according to an embodiment may be referred to as a table illustrating a policy of LB parameters of each time slot in an operating period (for example, the first period, the second period) of the base station 1301. In an embodiment, a second table 2320 may be referred to as a table that is generated by applying a LB parameter application rate to the first table 2310.

According to an embodiment, the first table 2310 may include CM information of each of the plurality of cells in each time slot of the period (for example, the first period, the second period) of the base station 1310.

For example, when it is assumed that a LB parameter application rate is 0.8 and the operating period of the base station 1301 is 14 days, an optimal LB parameter may be applied to the base station 1301 for 11 days. In an example, the LB parameter may be applied for 3 days based on an optimization learning record. For example, referring to the second table 2320, an optimal LB parameter may be applied to the base station 1301 for 11 days from January 1, 2022 to January 11, 2022. For example, the optimal LB parameter may correspond to the LB parameter that is determined in operation 1609 of FIG. 16A.

In another example, referring to the second table 2320, the parameter may be applied to the base station 1301 for 3 days from January 12, 2022 to January 14, 2022 based on the optimization learning record. For example, the parameter based on the optimization learning record may correspond to a record indicating that the LB server 1305 predicts a LB parameter expected as having a higher reward than the initial LB parameter and repeatedly learns by using the predicted LB parameter in operation 2205 of FIG. 22.

According the disclosure, an operating method of a server in a wireless communication system may include: acquiring first configuration management (CM) information and first performance management (PM) information of a first period regarding a sector managed by the server; training a load balance model based on the first CM information and the first PM information; and determining a second load balance parameter to be used for distribution of communication traffic in the sector, based on output information which is outputted as a plurality of candidate load balance parameters are inputted to the load balance model. The first CM information may include a first load balance parameter used for distribution of communication traffic in the sector, and the first PM information may include at least one PM value indicating communication performance of the sector.

According to an embodiment, the first PM information may further include information on a number of pieces of user equipment (UE) in the sector and information on traffic of the UE. The load balance model may output the at least one PM value indicting the communication performance of the sector as the first CM information, the information on the number of pieces of UE, and the information on the traffic of the UE are inputted.

According to an embodiment, the operating method of the server may further include determining a load balance parameter policy to be applied to a base station for a second period after the first period, based on the determined second load balance parameter. The base station may perform communication with at least one UE in the sector, based on the determined load balance parameter policy.

According to an embodiment, the load balance parameter policy may include information on an identification (ID) of the sector, information on the first period, information on the number of the at least one UE in the sector, information on the traffic of the at least one UE, information on whether the base station applies the second load balance parameter to the base station for the second period, and/or information on a rate at which the second load balance parameter is applied for the second period.

According to an embodiment, the operating method of the server may include: transmitting information on a predetermined load balance parameter policy to a base station or an external server controlling setting of the base station; acquiring the first CM information and the first PM information from the external database; and training the load balance model based on the acquired first CM information and the first PM information. The base station may acquire the first PM information for the first period by using the first CM information which is acquired based on the predetermined load balance parameter policy. The acquired first CM information and the first PM information may be stored in an external database.

According to an embodiment, the acquired first PM information may include throughput information on a throughput measured in cells in the sector for the first period and/or downlink load information on a downlink load measured in the cells in the sector for the first period. The predetermined load balance parameter policy may be predetermined based on the throughput information or the downlink load information.

According to an embodiment, the first PM information may include a plurality of PM values, and the plurality of PM values may indicate communication performance of corresponding cells in the sector. The operating method of the server may further include: comparing one of a minimum value, a maximum value, or a standard deviation of the plurality of PM values and a target PM value; and determining whether to transmit the second load balance parameter to a base station or an external server controlling setting of the base station, based on a result of comparing.

According to an embodiment, the load balance model may include a first stage model, a second stage model, and a third stage mode. As the first CM information is inputted to the first stage model, first output information may be outputted from the first stage model. As the first output information is inputted to the second stage model, second output information may be outputted from the second stage model. As the second output information is inputted to the third stage model, at least part of the first PM information may be outputted from the third stage model.

According to an embodiment, the first stage model may include a cell user equipment (UE) prediction model, a cell average reference signal received power (RSRP) prediction model, a cell average reference signal received quality (RSRQ) prediction model, a cell average rank index (RI) prediction model, and a cell health prediction model. The second stage model may include a cell IP throughput prediction model and a cell DL load prediction model. The third stage model may include a reward decision model.

According to an embodiment, the cell health prediction model may output the at least one PM value indicating the communication performance of the sector as the first CM information is inputted, and may determine a communication state of the cells in the sector by comparing the digitized at least one PM value and a threshold value. The outputted at least one PM value may be digitized.

According to an embodiment, the operating method of the server may include: acquiring a plurality of rewards which are outputted as the plurality of candidate load balance parameters are inputted to the load balance model; training a policy model based on the plurality of candidate load balance parameters and the plurality of rewards; and determining a candidate load balance parameter that has a largest reward value among the plurality of candidate load balance parameters as the second load balance parameter by using the trained policy model. The plurality of rewards may correspond to the plurality of candidate load balance parameters, respectively.

According to an embodiment, the first CM information may include a hand over parameter of a base station and a selection parameter on the cells in the sector. The first PM information may include information on a number of pieces of user equipment (UE) in the sector, information on traffic of the UE, information on a throughput of the cells in the sector, information on a downlink load of the cells, information on reference signal received power (RSRP) of the cells, information on reference signal received quality (RSRQ) of the cells, and information on a rank index (RI) of the cells.

According to an embodiment, the operating method of the server may include: acquiring second CM information and second PM information of a second period regarding the sector; training the load balance model based on the second CM information and the second PM information; and determining a third load balance parameter to be used for distribution of the communication traffic in the sector for a third period, based on the trained load balance model. The second CM information may include the second load balance parameter. The second PM information may include at least one PM value indicating communication performance of the sector for the second period when the base station is set based on the second load balance parameter. The third period may be after the second period.

According to an embodiment, the second period may arrive after a designated time from the first period.

According to an embodiment, the first PM information may include PM data corresponding to designated time slots in the first period. The operating method of the server may include: comparing a PM value of each time slot which is acquired based on the PM data, and a target PM value; and determining a time slot of a second period in which the second load balance parameter is applied to setting of a base station, based on a result of comparing.

According the disclosure, a server in a wireless communication system may include a transceiver and at least one processor, and the at least one processor may acquire first configuration management (CM) information and first performance management (PM) information of a first period regarding a sector managed by the server, may train a load balance model based on the first CM information and the first PM information, and may determine a second load balance parameter to be used for distribution of communication traffic in the sector, based on output information which is outputted as a plurality of candidate load balance parameters are inputted to the load balance model. The first CM information may include a first load balance parameter used for distribution of communication traffic in the sector, and the first PM information may include at least one PM value indicating communication performance of the sector.

According to an embodiment, the first PM information may include information on a number of pieces of user equipment (UE) in the sector and information on traffic of the UE. The load balance model may output the at least one PM value indicting the communication performance of the sector as the first CM information, the information on the number of pieces of UE, and the information on the traffic of the UE are inputted.

According to an embodiment, the at least one processor may determine a load balance parameter policy to be applied to a base station for a second period after the first period, based on the determined second load balance parameter, and the base station may perform communication with at least one UE in the sector, based on the determined load balance parameter policy.

According to an embodiment, the at least one processor may transmit information on a predetermined load balance parameter policy to a base station or an external server controlling setting of the base station, and the base station may acquire the first PM information for the first period by using the first CM information which is acquired based on the predetermined load balance parameter policy. The at least one processor may acquire the first CM information and the first PM information from the external database, and may train the load balance model based on the acquired first CM information and the first PM information. The acquired first CM information and the first PM information may be stored in an external database.

According to an embodiment, the acquired first PM information may include throughput information on a throughput measured in cells in the sector for the first period and/or downlink load information on a downlink load measured in the cells in the sector for the first period. The predetermined load balance parameter policy may be predetermined based on the throughput information or the downlink load information.

## Claims

1. An operating method of a server in a wireless communication system, the method comprising:
acquiring first configuration management (CM) information and first performance management (PM) information of a first period regarding a sector managed by the server, wherein the first CM information includes a first load balance parameter used for distribution of communication traffic in the sector, and wherein the first PM information includes at least one PM value indicating communication performance of the sector;
training a load balance model based on the first CM information and the first PM information; and
determining a second load balance parameter to be used for distribution of communication traffic in the sector, based on output information which is outputted as a plurality of candidate load balance parameters are inputted to the load balance model.

2. The operating method of claim 1, wherein the first PM information further includes information on a number of a user equipment (UE) in the sector and information on traffic of the UE, and
wherein the load balance model outputs the at least one PM value indicting the communication performance of the sector as the first CM information, the information on the number of the UE, and the information on the traffic of the UE are inputted.

3. The operating method of claim 1, further comprising determining a load balance parameter policy to be applied to a base station for a second period after the first period, based on the determined second load balance parameter,
wherein the base station performs communication with at least one UE in the sector, based on the determined load balance parameter policy.

4. The operating method of claim 3, wherein the load balance parameter policy includes information on an identification (ID) of the sector, information on the first period, information on the number of the at least one UE in the sector, information on the traffic of the at least one UE, information on whether the base station applies the second load balance parameter to the base station for the second period, and/or information on a rate at which the second load balance parameter is applied for the second period.

5. The operating method of claim 1, comprising:
transmitting information on a predetermined load balance parameter policy to a base station or an external server controlling configuration of the base station, the base station acquiring the first PM information for the first period by using the first CM information which is acquired based on the predetermined load balance parameter policy, the acquired first CM information and the first PM information being stored in an external database;
acquiring the first CM information and the first PM information from the external database; and
training the load balance model based on the acquired first CM information and the first PM information.

6. The operating method of claim 5, wherein the acquired first PM information includes throughput information on a throughput measured in cells in the sector for the first period and/or downlink load information on a downlink load measured in the cells in the sector for the first period, and
wherein the predetermined load balance parameter policy is predetermined based on the throughput information or the downlink load information.

7. The operating method of claim 1, wherein the first PM information includes a plurality of PM values, and the plurality of PM values indicate communication performance of corresponding cells in the sector, and
wherein the method further comprises:
comparing one of a minimum value, a maximum value, or a standard deviation of the plurality of PM values and a target PM value; and
determining whether to transmit the second load balance parameter to a base station or an external server controlling configuration of the base station, based on a result of comparing.

8. The operating method of claim 1, wherein the load balance model comprises a first stage model, a second stage model, and a third stage mode,
wherein as the first CM information is inputted to the first stage model, first output information is outputted from the first stage model,
wherein as the first output information is inputted to the second stage model, second output information is outputted from the second stage model, and
wherein as the second output information is inputted to the third stage model, at least part of the first PM information is outputted from the third stage model.

9. The operating method of claim 8, wherein the first stage model comprises a cell user equipment (UE) prediction model, a cell average reference signal received power (RSRP) prediction model, a cell average reference signal received quality (RSRQ) prediction model, a cell average rank index (RI) prediction model, and a cell health prediction model,
wherein the second stage model comprises a cell IP throughput prediction model and a cell DL load prediction model, and
wherein the third stage model comprises a reward decision model.

10. The operating method of claim 9, wherein the cell health prediction model is configured to:
output the at least one PM value indicating the communication performance of the sector as the first CM information is inputted, the outputted at least one PM value being digitized; and
determine a communication state of the cells in the sector by comparing the digitized at least one PM value and a threshold value.

11. The operating method of claim 1, comprising:
acquiring a plurality of rewards which are outputted as the plurality of candidate load balance parameters are inputted to the load balance model, the plurality of rewards corresponding to the plurality of candidate load balance parameters, respectively;
training a policy model based on the plurality of candidate load balance parameters and the plurality of rewards; and
determining a candidate load balance parameter that has a largest reward value among the plurality of candidate load balance parameters as the second load balance parameter by using the trained policy model.

12. The operating method of claim 1, wherein the first CM information includes a hand over parameter of a base station and a selection parameter on the cells in the sector, and
wherein the first PM information includes information on a number of a user equipment (UE) in the sector, information on traffic of the UE, information on a throughput of the cells in the sector, information on a downlink load of the cells, information on reference signal received power (RSRP) of the cells, information on reference signal received quality (RSRQ) of the cells, and information on a rank index (RI) of the cells.

13. The operating method of claim 1, comprising:
acquiring second CM information and second PM information of a second period regarding the sector, wherein the second CM information includes the second load balance parameter, and wherein the second PM information includes at least one PM value indicating communication performance of the sector for the second period when the base station is set based on the second load balance parameter;
training the load balance model based on the second CM information and the second PM information; and
determining a third load balance parameter to be used for distribution of the communication traffic in the sector for a third period, based on the trained load balance model,
wherein the third period is after the second period.

14. The operating method of claim 14, wherein the second period arrives after a designated time from the first period.

15. The operating method of claim 1, wherein the first PM information includes PM data corresponding to designated time slots in the first period,
wherein the method comprises:
comparing a PM value of each time slot which is acquired based on the PM data, and a target PM value; and
determining a time slot of a second period in which the second load balance parameter is applied to configuration of a base station, based on a result of comparison.
